# EUROPÄISCHE PATENTSCHRIFT

(11) **EP 1 771 509 B1**
(45) Veröffentlichungstag und Bekanntmachung des Hinweises auf die Patenterteilung: **09.09.2009**
(21) Anmeldenummer: 05772242.3
(22) Anmeldetag: 30.06.2005
(51) Int. Cl.: C08L 33/14, C08L 41/00, C04B 24/16, C04B 24/26

(54) **MISCHUNGSZUSAMMENSETZUNG ENTHALTEND COPOLYMERE AUF BASIS VON UNGESÄTTIGTEN CARBONSÄURE- UND ALKENYLETHER-DERIVATEN SOWIE SULFOGRUPPENHALTIGE CO- UND TERPOLYMERE UND DEREN VERWENDUNG**
MIXTURE COMPOSITION CONTAINING UNSATURATED CARBOXYLIC ACID AND ALKENE ETHER DERIVATIVE BASED COPOLYMERS AND COPOLYMERS AND TERPOLYMERS CONTAINING SULFO GROUPS AND USE THEREOF
COMPOSITION DE MELANGE CONTENANT DES COPOLYMERES A BASE DE DERIVES INSATURES D'ACIDE CARBOXYLIQUE ET D'ALCENYLETHER, ET DES CO- ET TERPOLYMERES QUI CONTIENNENT DES GROUPES SULFO, AINSI QUE SON UTILISATION

(30) Priorität: 03.07.2004 DE 102004032399
(43) Veröffentlichungstag der Anmeldung: 11.04.2007
(73) Patentinhaber: Construction Research & Technology GmbH, 83308 Trostberg (DE)
(72) Erfinder: MAIER, Markus, 83308 Trostberg (DE); KÄSTNER, Ulrike, 83308 Trostberg (DE); STRAUSS, Werner, 83308 Trostberg (DE); WUTZ, Konrad, 83308 Trostberg (DE); KEILHOFER, Gregor, 83342 Tacherting (DE); FENCHL, Andrea, 83512 Wasserburg (DE)
(74) Vertreter: Böhm, Brigitte
(86) Internationale Anmeldenummer: PCT/EP2005/007088
(87) Internationale Veröffentlichungsnummer: WO 2006/002935

(56) Entgegenhaltungen:
- DE-A1- 10 037 629
- DE-A1- 19 926 611
- US-A- 4 413 681
- US-A1- 2003 106 464
- PATENT ABSTRACTS OF JAPAN Bd. 2003, Nr. 04, 2. April 2003 (2003-04-02) & JP 2002 348160 A (NIPPON SHOKUBAI CO LTD), 4. Dezember 2002 (2002-12-04)

## Beschreibung

Die vorliegende Erfindung betrifft eine Mischungszusammensetzung mit dispergierenden Eigenschaften, die zum einen Copolymere auf Basis von ungesättigten Mono- oder Dicarbonsäure-Derivaten und Oxyalkylenglykol-Alkenylethern als Komponente I und zum anderen sulfogruppenhaltige Co- und Terpolymere als Komponente II enthält, sowie die Verwendung dieser Mischungszusammensetzung.

Die beiden Hauptkomponenten I und II der beanspruchten Mischungszusammensetzung sind aus dem Stand der Technik für sich jeweils hinlänglich bekannt. So beschreibt die deutsche Offenlegungsschrift DE 199 26 611 Copolymere gemäß Komponente I, die sich hervorragend als Zusatzmittel für wässrige Suspensionen anorganischer und organischer Feststoffe eignen, die insbesondere auf mineralischen oder bituminösen Bindemitteln, wie Zement, Gips, Kalk, Anhydrit oder sonstigen Calciumsulfat-basierenden Baustoffen beruhen. Die beschriebenen Copolymere können aber auch gleichermaßen als Zusatzmittel für wässrige Suspensionen eingesetzt werden, die auf pulverförmigen Dispersionsbindemitteln basieren. Vorbeschrieben ist auch der Einsatz dieser Copolymeren in den Bereichen keramische Massen, Feuerfestmassen sowie Ölfeldbaustoffe.

Die deutsche Offenlegungsschrift 100 37 629 und das noch unveröffentlichte Dokument DE 103 48 502.3 beschreiben die Co- und Terpolymeren gemäß Hauptkomponente II. DE 100 37 629 schreibt Copolymeren gemäß Hauptkomponente II ausgezeichnete wasserrückhaltende Eigenschaften auch bei relativ hohen Anwendungstemperaturen zu, wobei die Copolymeren auch dazu geeignet sind, Pigment-haltigen Anstrichstoffen, Putzen, Klebemörteln, Spachtelmassen, Fugenfüllern, Spritzbeton, Unterwasserbeton, Erdölbohrzementen und anderen bauchemischen Produkten hervorragende anwendungstechnische Eigenschaft sowohl im Verarbeitungs- als auch im erhärteten bzw. getrockneten Zustand zu verleihen. Die dort beschriebenen Polymeren zeichnen sich besonders dadurch aus, dass man mit ihnen in den Baustoffmischungen auch bei hoher Elektrolytkonzentration die verdickenden Eigenschaften gezielt über die Kettenlänge, Ladungsdichte, Amphiphilie und hydrophoben Seitenketten einstellen kann. In Beton und Fließestrichen und anderen fließfähigen Ausgleichsmassen dienen die Copolymeren gemäß DE 100 37 629 in niedriger Dosierung als Stabilisatoren und Antisegregationsmittel.

In der noch nicht veröffentlichten deutschen Patentanmeldung 103 48 502.3 werden aufbauend auf DE 100 37 629 wasserlösliche sulfogruppenhaltige Co- und Terpolymere vorbeschrieben, die ebenfalls hervorragend geeignet sind, um wässrigen Baustoffsystemen und wasserbasierenden Anstrich- und Beschichtungssystemen stabilisierende Eigenschaften zu verleihen. Als in diesem Zusammenhang besonders geeignete Anwendungsgebiete sind wässrige Baustoffsysteme genannt, die als hydraulische Bindemittel Zement, Kalk, Gips und Anhydrit enthalten.

Bei der Entwicklung der Copolymeren entsprechend Hauptkomponente I stand die Aufgabe im Vordergrund, neue Verbindungen bereitzustellen, die bereits mit geringer Dosierung die Verarbeitbarkeit hochkonzentrierter Baustoffmischungen praxisgerecht lange aufrechterhalten, wobei auch bei einer durch eine extreme Absenkung des Wasser/Bindemittel-Verhältnisses gleichzeitig eine erhöhte Festigkeit im erhärteten Zustand des Baustoffs erreicht werden sollte.

Für die Entwicklung der Co- und Terpolymeren entsprechend Hauptkomponente II der vorliegenden Erfindung stand als Ziel eine bei vergleichsweise hohen Temperaturen ausgeprägte Wirksamkeit im Vordergrund. Gleichermaßen sollten diese Polymere auch bei hohen Elektrolyt-Gehalten konstant verdickende Eigenschaften zeigen, sie sollten einfach und gut reproduzierbar herstellbar sein und schließlich den Baustoff- und Anstrichsystemen, denen sie zugesetzt werden, ausgezeichnete anwendungstechnische Eigenschaften bei der Verarbeitung, aber auch im erhärteten bzw. getrockneten Zustand, verleihen.

Da für die beiden beschriebenen Polymergruppen sowohl jeweils die Aufgabenstellungen erfüllt werden konnten und sich überdies in der Praxis zusätzliche positive Eigenschaften nachweisen ließen, wäre es nun wünschenswert, wenn sowohl die jeweiligen positiven Eigenschaften der beschriebenen Polymeren in einer Zusammensetzung vereint, als auch die jeweiligen Vorteile in bekannten Anwendungsgebieten auf andere Bereiche ausgedehnt werden könnten.

Für die vorliegende Erfindung hat sich deshalb die Aufgabe gestellt, eine Mischungszusammensetzung bereitzustellen, die auf Basis bekannter Co- und Terpolymere sowohl dispergierende Eigenschaften für anorganische und organische Feststoffe, insbesondere auf Basis mineralischer oder bituminöser Bindemittel, aufweist als auch die Viskosität von Baustoffmischungen positiv beeinflusst, wobei insbesondere die Stabilität der Baustoffmischungen bereits in niedriger Dosierung möglich werden sollte. Zudem sollte diese Mischungszusammensetzung in einfacher und wirtschaftlicher Weise zugänglich sein.

Gelöst wurde diese Aufgabe mit einer Mischungszusammensetzung mit dispergierenden Eigenschaften enthaltend I) Copolymere auf Basis von ungesättigten Mono- oder Dicarbonsäure-Derivaten und Oxyalkylenglykol-Alkenylethern und II) wasserlösliche sulfogruppenhaltige Co- und Terpolymere mit einem zahlenmittleren Molekulargewicht von 50 000 bis 20 000 000 g/Mol.

Überraschend hat sich bei dieser Mischungszusammensetzung herausgestellt, dass sie nicht nur die geforderten Produkteigenschaften besitzt, sondern dass sie darüber hinaus ein Anwendungsspektrum abdeckt, das über die Verwendungsmöglichkeiten der Einzelkomponenten hinaus reicht. So kann die beanspruchte Mischungszusammensetzung nicht nur als Dispergiermittel in bauchemischen Anwendungen eingesetzt werden, sondern sie ist ganz allgemein geeignet, organische und anorganische Pigmente und Füllstoffe zu dispergieren. Im bauchemischen Anwendungsbereich gehen die Verwendungsmöglichkeiten für die erfindungsgemäße Mischungszusammensetzung ebenfalls über den bekannten Einsatz als Zusatzmittel für wässrige Baustoffsysteme hinaus, da die die Komponenten I) und II) enthaltenden Mischungszusammensetzungen ausgezeichnete verflüssigende und gleichzeitig ausgeprägt stabilisierende Eigenschaften aufweisen, aber darüber hinaus geeignet sind, bislang bekannte Fließmittelzusätze, wie bspw. Casein zu ersetzen, wobei sowohl die Wirksamkeit als auch die Verarbeitung deutlich gesteigert werden können. Die Summe der mit der erfindungsgemäßen Mischungszusammensetzung erzielbaren Wirkungen in den unterschiedlichsten Anwendungsbereichen übersteigt somit diejenigen, wie sie aus der eigentlich naheliegenden Kombination der Einzelkomponenten zu erwarten waren, was in dieser Ausprägung nicht vorhersehbar war.

Die Komponente I der Mischungszusammensetzung entsprechend der vorliegenden Erfindung enthält mindestens 3, vorzugsweise jedoch 4 Baugruppen a), b), c) und d). Die erste Baugruppe a) stellt ein Mono- oder Dicarbonsäure-Derivat mit der allgemeinen Formel Ia, Ib oder Ic dar.

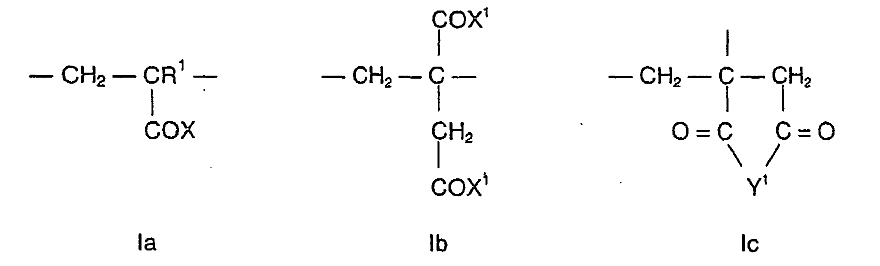

Beim Monocarbonsäure-Derivat Ia bedeutet R¹ Wasserstoff oder einen aliphatischen Kohlenwasserstoffrest mit 1 bis 20 C-Atomen, vorzugsweise eine Methylgruppe. X¹ in den Strukturen Ia und Ib steht für - OMₐ¹ und/oder - O- (CₘH₂ₘO)ₙ - R² bzw. - NH - (CₘH₂ₘO)ₙ - R² mit folgender Bedeutung für M¹, a, m, n und R²:

M¹ bedeutet Wasserstoff, ein ein- oder zweiwertiges Metallkation, Ammonium, ein organischer Aminrest sowie a = ½ oder 1, je nachdem, ob es sich bei M¹ um ein ein- oder zweiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₈₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form. Natrium, Kalium, Calcium und Magnesium stellen bzgl. M¹ bevorzugte ein- oder zweiwertige Metallionen dar.

R² bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Anstelle des oder neben dem Dicarbonsäure-Derivat gemäß Formel Ib kann die Baugruppe a) (Mono- oder Dicarbonsäure-Derivat) auch in cyclischer Form entsprechend Formel Ic vorliegen, wobei Y = O (Säureanhydrid) oder NR² (Säureimid) darstellen kann mit der oben bezeichneten Bedeutung für R².

Die zweite Baugruppe b) entspricht Formel II 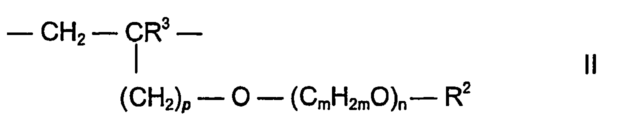 und leitet sich von Oxyalkylenglykol-Alkenylethern ab, in der m, n und R² die oben bezeichnete Bedeutung besitzen. R³ bedeutet wiederum Wasserstoff oder einen aliphatischen Kohlenwasserstoffrest mit 1 bis 5 C-Atomen, der ebenfalls linear oder verzweigt bzw. auch ungesättigt sein kann. *p* kann Werte zwischen 0 und 3 annehmen.

Gemäß den bevorzugten Ausführungsformen bedeuten in den Formeln Ia, Ib und II m = 2 und/oder 3, so dass es sich um Polyalkylenoxid-Gruppen handelt, die sich von Polyethylenoxid und/oder Polypropylenoxid ableiten. In einer weiteren bevorzugten Ausführungsform bedeutet p in Formel II 0 oder 1, d.h. es handelt sich um Vinyl- und/oder Alkylpolyalkoxylate.

Die dritte Baugruppe c) entspricht der Formel IIIa oder IIIb

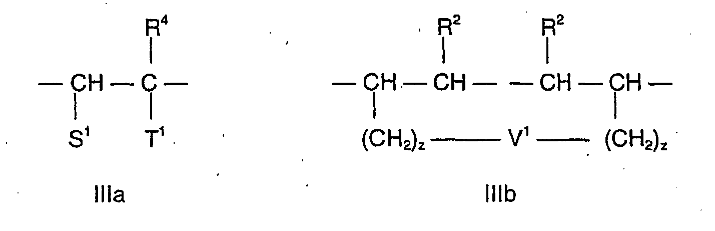

In Formel IIIa kann R⁴ = H oder CH₃ sein, je nachdem es sich um Acryl- oder Methacrylsäure-Derivate handelt. S¹ kann hierbei - H, - COOMₐ¹ oder -COOR⁵ bedeuten, wobei a und M¹ die oben erwähnte Bedeutung besitzen und R⁵ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T¹ = - COOR⁵ ist S¹ = COOMₐ oder - COOR⁵. Für den Fall, dass T¹ und S¹ = COOR⁵ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polethylenoxid-Derivate mit 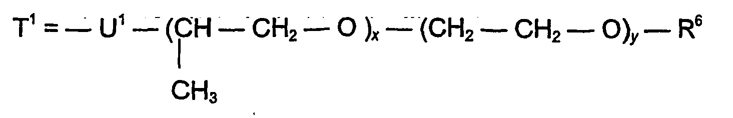 *x* nimmt hierbei einen Wert von 1 bis 150 und *y* von 0 bis 15 an. Die Polypropylenoxid(-Polyethylenoxid-)-Derivate können hierbei über eine Gruppierung U¹ mit dem Ethylrest der Baugruppe c) entsprechend Formel IIIa verknüpft sein, wobei U¹ = - CO - NH -, - O - oder - CH₂ - O- sein kann. Hierbei handelt es sich um die entsprechenden Amid-, Vinyl- oder Allylether der Baugruppe entsprechend Formel IIIa. R⁶ kann hierbei wiederum R² (Bedeutung von R² siehe oben) oder 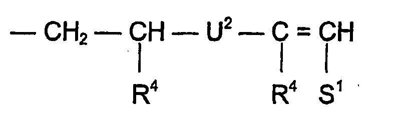 sein, wobei U² = - NH - CO -, - O -, oder - OCH₂- bedeuten kann und S¹ die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weiteres hydrophobes Strukturelement können die Verbindungen entsprechend Formel IIIa Polydimethylsiloxan-Gruppen enthalten, was im Formelschema IIIa T¹ = - W¹ - R⁷ entspricht.

W¹ bedeutet hierbei 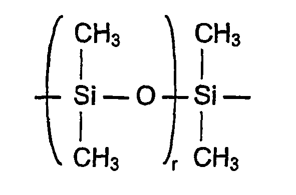 (nachfolgend Polydimethylsiloxan-Gruppierung genannt), R⁷ kann = R² sein und r kann hierbei Werte von 2 bis 100 annehmen.

Die Polydimethylsiloxan-Gruppierung kann nicht nur direkt an den Ethylenrest gemäß Formel IIIa gebunden sein, sondern auch noch über die Gruppierungen
- CO - [NH - (CH₂)₃]ₛ -W¹-R⁷ oder - CO - O(CH₂)*_{z}* - W¹ -R⁷,
wobei R⁷ vorzugsweise = R² bedeutet und *s*= 1 oder 2 und *z*= 0 bis 4 sein können. R⁷ kann außerdem noch 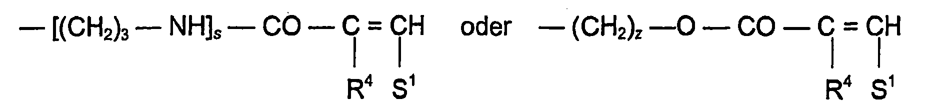 bedeuten.

Hierbei handelt es sich um die entsprechenden difunktionellen Ethylenverbindungen entsprechend der Formel IIIa, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel IIIa mit T¹ = (CH₂)_{z}- V¹ - (CH₂)*_{z}*- CH = CH - R², wobei *z*= 0 bis 4, V¹ entweder ein Polydimethylsiloxan-Rest W¹ oder ein - O - CO - C₆H₄ - CO - O-Rest sein kann und R² die oben angegebene Bedeutung besitzt. Diese Verbindungen leiten sich von den entsprechenden Dialkenyl-phenyl-dicarbonsäureestern oder Dialkenyl-polydimethylsiloxan-Derivaten ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im wesentlichen den Baugruppen entsprechend der Formel IIIb 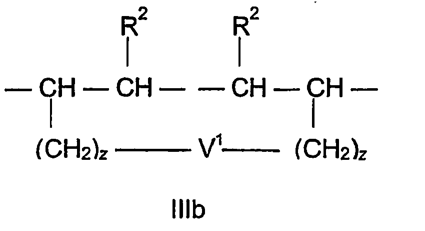 wobei R², V¹ und *z* die bereits beschriebene Bedeutung besitzen.

Die vierte Baugruppe d) leitet sich ab von einem ungesättigten Dicarbonsäure-Derivat der allgemeinen Formel IVa und/oder IVb 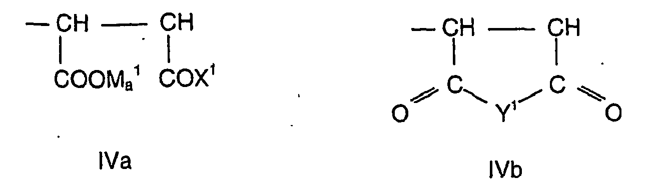 mit der oben angegebenen Bedeutung für a, M¹, X¹ und Y¹.

Es ist dabei als bevorzugt anzusehen, dass die Copolymere I 51 bis 95 Mol-% Baugruppen der Formel Ia und/oder Ib und/oder Ic, 1 bis 48,9 Mol-% Baugruppen der Formel II, 0,1 bis 5 Mol-% Baugruppen der Formel IIIa und/oder IIIb und 0 bis 47,9 Mol-% Baugruppen der Formel IVa und/oder IVb enthalten.

Besonders bevorzugt enthält Komponente I 55 - 75 Mol-% Baugruppen der Formel Ia und/oder Ib, 19,5 bis 39,5 Mol-% Baugruppen der Formel II, 0,5 bis 2 Mol-% Baugruppen der Formel IIIa und/oder IIIb und 5 bis 20 Mol-% Baugruppen der Formel IVa und/oder IVb.

Gemäß einer bevorzugten Ausführungsform enthält die erfindungsgemäße Mischungszusammensetzung bzgl. Komponente I zusätzlich noch bis zu 50 Mol-%, insbesondere bis zu 20 Mol-% bezogen auf die Summe der Baugruppen der Formeln I, II, III und IV, Strukturen, die auf Monomeren auf Basis von Vinyl- oder (Meth-)Acrylsäure-Derivaten wie Styrol, α-Methylstyrol, Vinylacetat, Vinylpropionat, Ethylen, Propylen, Isobuten, Hydroxyalkyl(meth)acrylate, Acrylamid, Methacrylamid, N-Vinylpyrrolidon, Allylsulfonsäure, Methallylsulfonsäure, Vinylsulfonsäure, Vinylphosphonsäure, AMPS, Methylmethacrylat, Methylacrylat, Butylacrylat, Allylhexylacrylat u.a. beruhen.

Die Anzahl der sich wiederholenden Struktureinheiten in den Copolymeren I ist nicht eingeschränkt. Als besonders vorteilhaft hat es sich jedoch erwiesen, mittlere Molekulargewichte von 1 000 bis 100 000 g/Mol einzustellen.

Die Co- und Terpolymeren II enthalten erfindungsgemäß vier Baugruppen a), b), c) und/oder d).

Die erste Baugruppe a) stellt ein sulfogruppenhaltiges substituiertes Acryl- oder Methacrylderivat der Formel I dar: 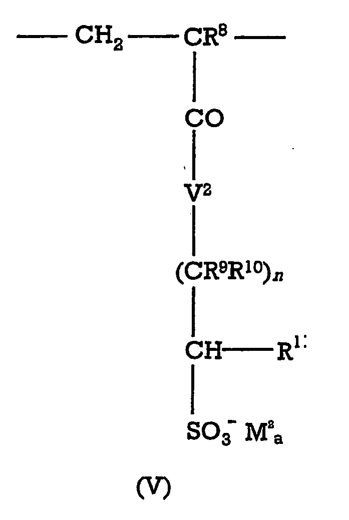 mit R⁸ = Wasserstoff oder Methyl, R⁹, R¹⁰ und R¹¹ = Wasserstoff, aliphatischer Kohlenwasserstoffrest mit 1 bis 6 C-Atomen, ggf. mit Methylgruppen substituierter Phenylrest, V² = NH oder Sauerstoff und M² = Wasserstoff, ein- oder zweiwertiges Metallkation, Ammonium oder ein organischer Aminrest, *n* = 1 bis 5 sowie a = ½ oder 1. Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.

Die Baugruppe a) der Komponente II leitet sich vor allem ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, 3-(Methacryloyl-oxy)-propansulfonsäure. Besonders bevorzugt ist 2-Acrylamido-2-methylpropansulfonsäure (AMPS) oder eines seiner Salze.

Gegebenenfalls können bis zu 50 Mol-% der Baugruppen a) von Komponente II durch weitere sulfonsäuregruppenhaltige Struktureinheiten ersetzt sein, die sich von Methallylsulfonsäure- oder Allylsulfonsäure-Monomeren ableiten.

In Komponente II entspricht die zweite Baugruppe b) der Formel VIa) und/oder VIb): 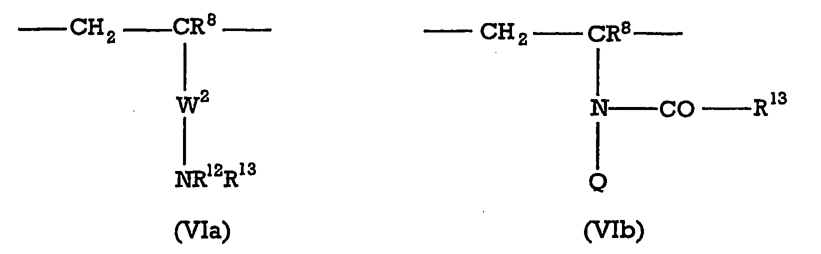 worin W² = -CO-, -CO-O-(CH₂)ₓ-, -CO-NR⁹-(CH₂)ₓ-
x= 1 bis 6 darstellen und
R⁸ sowie R⁹ oben genannte Bedeutung besitzen.

R¹² und R¹³ stehen unabhängig voneinander für Wasserstoff, einen gegebenenfalls substituierten aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. mit Hydroxyl-, Carboxyl- oder Sulfonsäuregruppen substituiert sein. Q bedeutet in Formel VIb) Wasserstoff oder -CHR¹²R¹⁴. Im Falle von Q ≠ H können R¹² und R¹³ außerdem in der Struktur VIb) zusammen für eine -CH₂-(CH₂)_{y}-Methylengruppe mit y = 1 bis 4 stehen, die unter Einschluss des Restes der Formel VIb) 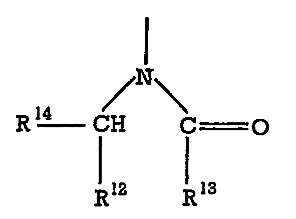 einen fünf- bis achtgliedrigen heterozyklischen Ring bilden. R¹⁴ kann ein Wasserstoffatom, einen C₁- bis C₄-Alkylrest, eine Carboxylsäure- oder eine Carboxylatgruppe -COOM²ₐ darstellen, wobei M² und a die oben genannte Bedeutung besitzen.

Als Monomere, die die Struktur VIa) bilden, kommen vorzugsweise folgende Verbindungen in Frage: Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur VIb) sind N-Methyl-N-vinylformamid, N-Methyl-N-vinylacetamid, N-Vinylpyrrolidon, N-Vinylcaprolactam, N-Vinylpyrrolidon-5-carbonsäure u.a.

Die dritte Baugruppe c) der Komponente II entspricht den Formeln VIIa und/oder VIIb 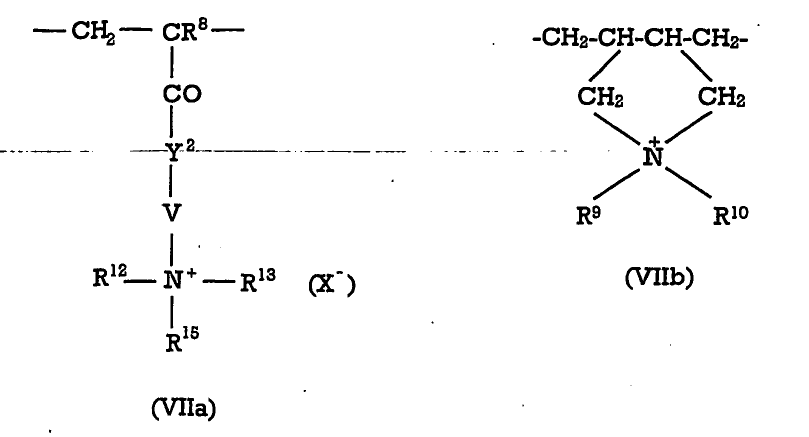 worin Y² = O, NH oder NR¹²
V² = -(CH₂)*ₓ*-, 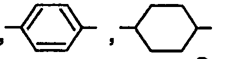 R¹⁵ = R¹² bzw. R¹³, -(CH₂)*ₓ*-SO₃^{⊖} M²ₐ, 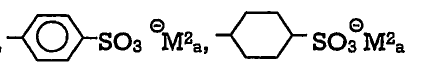 X² = Halogen (vorzugsweise Cl, Br), C₁- bis C₄-Alkylsulfat
(vorzugsweise Methylsulfat) oder C₁- bis C₄-Alkylsulfonat und
R⁸, R⁹, R¹⁰, R¹², R¹³ und *x* oben genannte Bedeutung besitzen.

Als Monomere, welche die Struktur (VIIa) bilden, kommen vorzugsweise folgende Verbindungen in Frage: [2-(Acryloyloxy)-ethyl]-trimethylammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammonium-chlorid bzw. -methosulfat, [3-(Methacryloylamino)-propyl]-trimethylammoniumchlorid, N-(3-Sulfopropyl)-N-methacryloxyethyl-N'-N-dimethyl-ammonium-betain, N-(3-Sulfopropyl)-N-methyacrylamidopropyl-N,N-dimethyl-ammoniumbetain und 1-(3-Sulfopropyl)-2-vinyl-pyridinium-betain.

Beispiele für Monomere als Basis für die Struktur VIIb) sind N,N-Dimethyldiallyl-ammoniumchlorid und N,N-Diethyl-diallyl-ammoniumchlorid.

Die vierte Baugruppe d) der Komponente II entspricht der Formel VIII 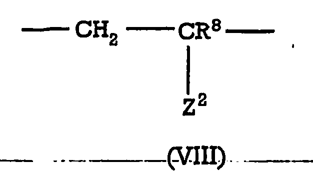 mit Z² = -COO(CₘH₂ₘO)ₙ-R¹⁶, -(CH₂)ₚ-O(CH₂CHW³O)ᵣ-(CₘH₂ₘO)ₙ-R¹⁶
W³ = H, CH₃, C₂H₅
r = 0 bis 100
R¹⁶ = H, 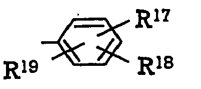 wobei mindestens ein Rest R¹⁷, R¹⁸ und/oder R¹⁹ vertreten sein muss, sowie ungesättigter oder gesättigter, linearer oder verzweigter, aliphatischer Kohlenwasserstoffrest mit 1 bis 40 C-Atomen
R¹⁷ = H, C₁ - C₆-Alkyl-, Phenyl-, Benzoyl-, C₁ - C₆-Alkoxy, Halogen (F, Cl, Br, I), Cyano, -COOH, -COOR¹², -CO-NH₂, -OCOR¹²
R¹⁸ = Arylalkylgruppe mit C₁ - C₁₂-Alkyl- und C₆ - C₁₄-Arylrest
m = 2 bis 4
n = 0 bis 200
p = 0 bis 20
sowie R⁸ und R¹² oben genannte Bedeutung besitzen.

Bevorzugte Monomere, welche die Struktur VIII bilden, sind Tristyrylpolyethylenglykol-1100-methacrylat, Behenylpolyethylenglykol-1100-methacrylat, Tristyrylpolyethylenglykol-1100-acrylat, Tristyrylpolyethenglykol-1100-monovinylether, Behenylpolyethenglykol-1100-monovinylether, Phenyltriethylenglykolacrylat, Tristyrylpolyethylenglykol-1100-vinyloxy-butylether, Behenylpolyethylenglykol-1100-vinyloxy-butylether, Tristyrylpolyethylenglykol-block-propylenglykolallylether, Behenylpolyethylenglykol-block-propylenglykolallylether usw.

Es ist als bevorzugt anzusehen, dass die Co- und Terpolymere II aus 3 bis 96 Mol-% der Baugruppe a), 3 bis 96 Mol-% der Baugruppe b), bis 75 Mol- % der Baugruppe c) und/oder bis 50 Mol-% der Baugruppe d) bestehen.

Besonders bevorzugt enthält die beanspruchte Mischungszusammensetzung Polymere II, die 30 bis 80 Mol-% a), 5 bis 55 Mol-% b), 2 bis 30 Mol-% c) und/oder 0,2 bis 15 Mol-% d) enthalten.

Die Anzahl der sich wiederholenden Strukturelemente in den erfindungsgemäß enthaltenen Co- und Terpolymeren II ist nicht eingeschränkt und hängt sehr stark vom jeweiligen Anwendungsgebiet ab. Es hat sich allerdings als vorteilhaft erwiesen, die Anzahl der Struktureinheiten so einzustellen, dass die Co- und Terpolymere ein zahlenmittleres Molekulargewicht von 50 000 bis 10 000 000 aufweisen.

Es hat sich im Rahmen der vorliegenden Erfindung als besonders vorteilhaft erwiesen, wenn der molare Anteil der Baugruppe c) von Komponente II um mindestens 5 Mol-% niedriger ist, als der molare Anteil der Baugruppe a).

Auch ist es im Rahmen der vorliegenden Erfindung noch möglich, dass in Komponente II bis zu 50 Mol-% der Baugruppen a), b) oder c) durch Struktureinheiten ersetzt sind, die sich von Acrylamid- oder N,N-Dimethylacrylamid-Monomeren ableiten.

Von der vorliegenden Erfindung wird ebenfalls eine Variante der beanspruchten Mischungszusammensetzung umfasst, bei der die Komponente II noch zusätzlich 0,0001 bis 50 Mol-% der Baugruppen e) enthält, die sich von mono-, di- und triolefinischen polymerisationsfähigen Verbindungen ableiten. Diesbezüglich können diolefinische Verbindungen als besonders bevorzugt angesehen werden, die aus Diacrylat oder Dimethylacrylatestern bestehen. Trimethylolpropan, Triacrylat und Triallylisocyanat gelten als bevorzugte triolefinische Monomere und Acryl- und Vinyl-Derivate als bevorzugte monoolefinische Verbindungen.

Es ist im Rahmen der vorliegenden Erfindung noch möglich, dass die Komponente II noch bis zu 50 Mol-%, insbesondere bis zu 20 Mol-%, bezogen auf die Summen der Baugruppen a), b), c) bzw. d) und ggf. e), noch eine weitere Baugruppe f) der Formel (IX) enthalten. 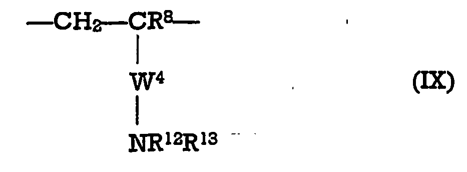 worin
- W⁴: = -CO-O-(CH₂)_{q}, -CO-NR⁹-(CH₂)_{q}-
- q: = 1 bis 6 darstellen und
- R⁸, R⁹, R¹² und R¹³: die oben genannte Bedeutung besitzen.

Als Monomere, welche die Struktur (IX) bilden, kommen vorzugsweise folgende Verbindungen in Frage: [3-(Methacryloylamino)-propyl]-dimethylamin, [3-(Acryloylamino)-propyl]-dimethylamin, [2-(Methacryloyloxy)-ethyl]-dimethylamin, [2-(Acryloyl-oxy)-ethyl]-dimethylamin, [2-(Methacryloyl-oxy)-ethyl]-diethylamin, [2-(Acryloyl-oxy)-ethyl]-diethylamin usw.

Es ist im Rahmen der vorliegenden Erfindung weiterhin noch möglich, dass bis zu 50 % der Baugruppe a) von Komponente II durch ein sulfonsäurehaltiges Betainmonomer der Formel (X) ersetzt werden. 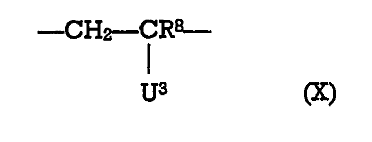 worin
- U³ =: 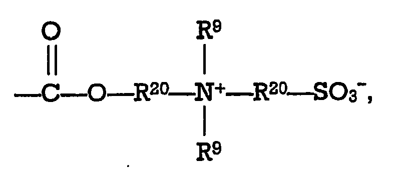 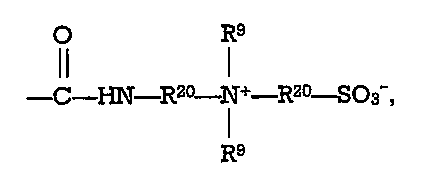 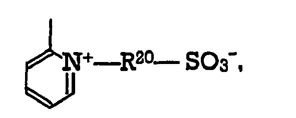
- R²⁰ =: 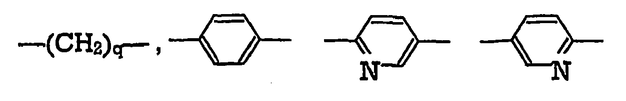
darstellen sowie
R⁸, R⁹ und q die oben genannte Bedeutung besitzen.

Als Monomere, welche die Struktur (X) bilden, kommen vorzugsweise folgende Verbindungen in Frage: N-(3-Sulfopropyl)-N-methacryloxyethyl-N'-N-dimethyl-ammonium-betain, N-(3-Sulfopropyl)-N-methacrylamidopropyl-N,N-dimethyl-ammonium-betain und 1-(3-Sulfopropyl)-2-vinyl-pyridinium-betain. Obwohl diese Monomere auch eine kationische Baugruppe enthalten, wirkt sich dies nicht negativ auf die Luftporenstabilität in der Anwendung aus.

Gegebenenfalls kann die Komponente II zusätzlich durch den Einbau von kleinen Mengen Vernetzer eine leicht verzweigte oder vernetzte Struktur erhalten. Beispiele für solche Vernetzer-Komponenten sind Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat. Diese Verbindungen dürfen nur in solchen Mengen eingesetzt werden, dass immer noch wasserlösliche Co- und Terpolymere als Komponente II erhalten werden. Generell wird die Konzentration selten über 0,1 Mol-% bezogen auf die Summen der Baugruppen a) bis g) liegen, ein Fachmann kann jedoch leicht die maximal einsetzbare Menge Vernetzer-Komponente bestimmen.

Insbesondere bevorzugt die vorliegende Erfindung eine Mischungszusammensetzung in viskoser und besonders bevorzugt in flüssiger Form.

Hinsichtlich der Herstellung der Mischungszusammensetzung und vor allem der darin hauptsächlich enthaltenen Komponenten I und II ist die vorliegende Erfindung keinerlei Beschränkung unterworfen.

So erfolgt die Herstellung der Copolymere gemäß Komponente I üblicherweise gemäß dem Verfahren wie in DE-OS 199 26 611 beschrieben. Die Herstellung der Co- und Terpolymere gemäß Komponente II richtet sich beispielsweise nach dem Verfahren gemäß DE-OS 100 37 629. Normalerweise erfolgt sie in an sich bekannter Weise durch Verknüpfung der die Strukturen a) bis d) bildenden Monomere durch radikalische, ionische oder komplex koordinative Substanz-, Lösungs-, Gel-, Emulsions-, Dispersions- oder Suspensionspolymerisation. Da es sich bei den Produkten immer um wasserlösliche Polymere handeln muss, ist die Polymerisation in wässriger Phase, die Polymerisation in umgekehrter Emulsion bzw. die Polymerisation in inverser Suspension bevorzugt.

Die nach diesen beschriebenen oder jeden anderen geeigneten Verfahren herstellbaren Polymerkomponenten I und II werden dann üblicherweise einer Grundzusammensetzung beigemischt. Sie können aber auch im gewünschten Gewichtsverhältnis einfach vorab zusammengemischt und als Vormischung einer Grundzusammensetzung beigemischt werden, womit man ebenfalls zur erfindungsgemäßen Mischungszusammensetzung gelangt. Vorteilhafterweise enthält die Mischungszusammensetzung 0,05 bis 50 Gew.-% der Komponente I und 0,01 bis 10 Gew.-% der Komponente II, wobei diese Komponenten als Feststoffe vorliegen sollten.

Von dieser Erfindung wird somit nicht nur eine Mischungszusammensetzung umfasst, die die Komponenten I und II neben anderen Komponenten enthält, sondern auch eine Mischungszusammensetzung, die die beiden Komponenten I und II ausschließlich enthält, wobei es sich dann um eine typische Vormischung handelt.

Da bei der vorliegenden Erfindung die dispergierenden Eigenschaften der Mischungszusammensetzung im Vordergrund stehen, wird auch eine entsprechende Variante beansprucht, bei der die Mischungszusammensetzung neben den Komponenten I und II auch organische und/oder anorganische Pigmente und Füllstoffe enthält, wodurch diesen vorteilhafte Eigenschaften zuteil werden. Neben der eigentlichen Mischungszusammensetzung beansprucht die vorliegende Erfindung auch deren Verwendung, wobei Anwendungsbereiche bevorzugt werden, die im Gegensatz zu den bislang bekannten Anwendungsgebieten der Einzelkomponenten I und II neue Verwendungszwecke erschließen.

Im Vordergrund steht dabei insbesondere die Verwendung der Mischungszusammensetzung als Dispergiermittel für organische und/oder anorganische Pigmente und Füllstoffe und ganz besonders bevorzugt in viskosen Zubereitungen. Mit diesem speziellen Verwendungszweck, der ganz allgemein auf Dispergiereigenschaften der Mischungszusammensetzung abstellt, geht die vorliegende Erfindung über die bislang bekannten Anwendungszwecke der getrennten Komponenten I und II hinaus, wobei im vorliegenden Fall die bekannten bauchemischen Anwendungen im Zusammenhang mit der dispergierenden Wirkung der Mischungszusammensetzung als besonders bevorzugtes Einsatzgebiet natürlich mitbeansprucht werden. In diesem Zusammenhang werden die Mischungszusammensetzungen gemäß Erfindung insbesondere als Zusatzmittel für wässrige Baustoffsysteme, besonders bevorzugt enthaltend hydraulische Bindemittel, wie Zement, Kalk, Gips, Anhydrit usw., eingesetzt. Vor allem die dispergierende Wirkung der beanspruchten Mischungszusammensetzung in bauchemischen und wässrigen Systemen erlaubt nun auch das stabile und homogene Einbringen organischer und anorganischer Pigmente, wie bspw. Eisenoxide, in hydraulische Bindemittel enthaltende Zusammensetzungen, wie bspw. Betone, Mörtel und Spachtelmassen.

Da in letzter Zeit immer häufiger farbige Betone und Zemente bspw. in Form farbiger Pflastersteine oder ganzer Betonfassaden zum Einsatz gelangen, besteht ein zunehmender Bedarf, Pigmente, bspw. vom Typ der Eisenoxide, entweder in Pulverform oder in Form einer Dispersion der Baustoffmischung zuzusetzen. War es bislang nur schwer möglich, vor allem die Pigmentstäube aber auch Pigmentpulver aufgrund einer meist ungenügenden Benetzung homogen einzuarbeiten, ist es nun mit den beanspruchten Mischungszusammensetzungen möglich, einsatzbereite und stabile Dispersionen zur Verfügung zu stellen, wobei die beanspruchte Verwendung der Mischungszusammensetzungen zusätzlich eine deutlich geringere Pigmentteilchengröße verbunden mit einer engeren Teilchengrößenverteilung erlaubt. Damit wird eine höhere Farbbrillanz bei einem gleichzeitig niedrigeren Pigmentverbrauch ermöglicht. Ein weiterer positiver Effekt ist, dass die eingesetzten Pigmente einen wesentlich geringeren negativen Einfluss auf die Eigenschaften des Baustoffes ausüben, so dass die eingestellten Ausgangsrezepturen nicht gesondert angepasst werden müssen. Hinzu kommt, dass die zugesetzten Pigmente präziser dosiert werden können, was bspw. auch ein ansatzfreies Formulieren des Baustoffs in mehreren Einzelschritten erlaubt, ohne dass es zu Farbschwankungen zwischen den einzelnen Bauabschnitten kommt, oder aber, dass bspw. nur vorab exakt berechnete Flächen bearbeitet werden können.

Insgesamt ist es mit den vorgeschlagenen Mischungszusammensetzungen und deren gleichzeitig dispergierenden und stabilisierenden Eigenschaften insbesondere für Pigmente und Füllstoffe möglich, organische und/oder anorganische Pigmente und Füllstoffe homogen, insbesondere in flüssiger Form, in viskose Zubereitungen, vor allem im Baustoffbereich, einzubringen, wobei ein nicht zu unterschätzender Vorteil darin besteht, dass die Stabilität der mit den erfindungsgemäßen Mischungszusammensetzungen hergestellten Dispersionen über einen längeren Zeitraum von mindestens drei Monaten gewährleistet ist, ohne dass sich die damit hergestellten Dispersionen entmischen.

Wie bereits angesprochen, ist das Anwendungsgebiet der erfindungsgemäßen Mischungszusammensetzung mit dispergierenden Eigenschaften nicht nur auf bauchemische Anwendungen beschränkt, sondern sie erlaubt darüber hinaus Einsatzgebiete, die den bisherigen Komponenten I oder II bei getrenntem Einsatz nicht zugänglich waren. So ist es mit der vorgeschlagenen Mischungszusammensetzung ohne Weiteres möglich, funktionale Systeme und Systeme, die bspw. Nanopartikel enthalten, herzustellen, wie sie z.B. Sonnencremes und ganz allgemein UV-Schutzmittel darstellen. Dabei können diese Lichtschutzmittel nicht nur in herkömmlicher Weise als Hautschutzformulierungen eingesetzt werden, sondern sie stellen generell einen stabilen UV-Schutz auch für bspw. Holzhaltige Substrate dar, was natürlich auch für verholzende Pflanzen gilt und weshalb sich bspw. auch die Anwendung in Apfelplantagen in der Landwirtschaft anbietet. Derartige funktionale Systeme stellen aber auch sogenannte Sperrschichten dar, bei denen es sich üblicherweise um Schichtsilikate in Kunststofffolien handelt, die die O₂-Migration vermindern sollen. Derartige Systeme, für die sich ebenfalls die vorgeschlagenen Mischungszusammensetzungen als Dispergiermittel eignen, stellen aber auch magnetooptische Systeme dar. Weitere Anwendungsgebiete für die in allgemeiner Weise dispergierend wirkende Mischungszusammensetzung gemäß Erfindung sind Schleifpasten, wie sie auch in Form von Slurries für die sogenannte "Chemical Mechanical Planarisation" Anwendung finden, aber auch katalytisch wirkende Oberflächen sowie elektrisch leitende Systeme, in die Leitfähigkeitspigmente mit Hilfe von Dispergiermitteln eingebracht werden.

Dennoch stehen als bevorzugte Einsatzgebiete der Mischungszusammensetzung mit dispergierender Wirkung bauchemische Anwendungszwecke im Vordergrund. Nicht zu vergessen sind in diesem Zusammenhang auch keramische Systeme und wasserbasierende Anstrich- und Beschichtungssysteme. Zum einen kann die erfindungsgemäße Mischungszusammensetzung direkt als Dispergiermittel in ein keramisches System oder ein wasserbasierendes Wasser- und Beschichtungssystem eingebracht werden, zum anderen aber auch in Form des beschriebenen wässrigen Baustoffsystems, dem die erfindungsgemäße Mischungszusammensetzung zunächst als Dispergiermittel zugesetzt wurde, bevor das damit formulierte wässrige Baustoffsystem in das keramische System oder das wasserbasierende Anstrich- und Beschichtungssystem gelangt.

Die Vielfalt der Einsatzmöglichkeiten der Mischungszusammensetzung gemäß Erfindung zeigt sich auch hervorragend in dessen Verwendungsmöglichkeit in bauchemischen Anwendungen allgemeiner Art und unabhängig von dessen dispergierender Wirkung. Aus diesem Grund beansprucht die vorliegende Erfindung auch eine Verwendungsvariante, bei der die erfindungsgemäße Mischungszusammensetzung als Zusatzmittel für wässrige Baustoffsysteme verwendet wird, wobei wiederum besonders bevorzugt solche Systeme in Frage kommen, die ein hydraulisches Bindemittel, wie bspw. Zement, Kalk, Gips, Anhydrit usw., enthalten. Hier entfaltet die Mischungszusammensetzung gemäß Erfindung seine positive Wirkung insbesondere als Fließmittel, wobei eine Verwendung besonders bevorzugt wird, bei der die Mischungszusammensetzung eine gleichzeitig stabilisierende Wirkung entfaltet. Im Rahmen dieser Verwendungsvariante empfiehlt die vorliegende Erfindung die Anwendung der beanspruchten Mischungszusammensetzung in selbstverlaufenden Ausgleichs- und Spachtelmassen, wobei ein besonders positiv ausgeprägter Effekt dadurch erzielt werden kann, dass die Mischungszusammensetzung als Casein-Ersatz Verwendung findet, was die vorliegende Erfindung besonders berücksichtigt.

Von Casein ist bekannt, dass es seit längerem als Additiv in selbstverlaufenden zementären Spachtelmassen Verwendung findet. Dabei übernimmt das Casein bei üblicher Dosierung die Funktion eines Fliessmittels und fungiert dabei teilweise als Stabilisierer. Damit verbunden ist sowohl eine viskositätserhöhende Wirkung, als auch das Verringern bzw. Verhindern des Absetzens und Entmischens. Die gebräuchlichen gebrauchsfertigen Spachtelmassen enthalten neben Casein zumeist einen zusätzlichen Stabilisierer in geringerer Menge, wobei hauptsächlich Cellulose-Ether zur Anwendung kommen. Derartige Casein-basierte Ausgleichsmassen, die auch als SLU, also "Self Levelling Underlayments", bezeichnet werden, sind geprägt durch gute Verlaufseigenschaften, eine gute sogenannte Selbstheilung und eine ausgeprägte Toleranz gegenüber einer Überwässerung.

Casein hat aber neben den genannten Vorteilen auch die Nachteile, dass es als Naturprodukt vor allem jahreszeitlich bedingten Qualitäts-, Verfügbarkeits- und Preisschwankungen unterworfen ist. Außerdem neigt es zur Schimmelbildung und bei der Herstellung zementärer Systeme sind relativ hohe Scherraten notwendig, um Casein in Lösung zu bringen.

Copolymere auf Polycarboxylat-Basis, wie sie bspw. die Komponente I der erfindungsgemäßen Mischungszusammensetzung darstellt, haben zwar eine sehr gute Dispergierwirkung, aber keine sehr ausgeprägt stabilisierenden Eigenschaften. Wenn nun diese Polycarboxylatether als Fliessmittel in Kombination mit Celluloseethern als Stabilisierer in Casein-basierten Formulierungen eingesetzt werden, müssen höhere Mengen an Celluloseether eingesetzt werden, um eine stabile Abmischung zu erhalten. Die hohe Dosierung von Celluloseethern wiederum bewirkt aber schlechte Fließeigenschaften der Spachtelmasse und die Toleranz des Gesamtsystems gegenüber einer Überwässerung verschlechtert sich gegenüber Casein-basierten Massen drastisch.

Demgegenüber entfalten die erfindungsgemäßen Mischungszusammensetzungen als Casein-Ersatz in zementären Systemen, wie bspw. Spachtelmassen, eine deutlich ausgeprägte stabilisierende Wirkung. Zusätzlich gewährleisten sie eine schnelle Auflösungsgeschwindigkeit und sie zeigen eine nur sehr wenig ausgeprägte oder gar keinerlei thixotropen Eigenschaften, so dass sich hohe und konstante Fliessmaße über einen längeren Zeitraum von mindestens einer Stunde ausbilden. Schließlich bewirken die beanspruchten Mischungszusammensetzungen als Casein-Ersatz keine Verzögerung hinsichtlich der Zementhydratation oder aber der Aushärtung und ein negativer Einfluss auf die Festigkeitsentwicklung ist ebenfalls nicht festzustellen.

Insgesamt können die vorgeschlagenen Mischungszusammensetzungen, die die Komponente I und die Komponente II in Kombination enthalten, als geeigneter Casein-Ersatz mit ausgezeichneten verflüssigenden und gleichzeitig stabilisierenden Eigenschaften angesehen werden.

Speziell bei der bevorzugten Verwendung der erfindungsgemäßen Mischungszusammensetzung als Casein-Ersatz in selbstverlaufenden Ausgleichs- und Spachtelmassen hat es sich als günstig erwiesen, wenn als Mischungsverhältnis zwischen der Komponente I und der Komponente II eines von 0,01 bis 99,99 Gew.-% : 99,99 bis 0,01 Gew.-% gewählt wird.

Die vorgeschlagene Kombination der aus dem Stand der Technik bekannten Copolymeren gemäß Komponente I und der Co- und der Terpolymeren gemäß Komponente II in der erfindungsgemäßen Mischungszusammensetzung hat insbesondere in den ebenfalls beanspruchten Verwendungsgebieten über das herkömmliche Wirkungsspektrum der Einzelkomponenten hinaus zu neuen und überraschenden Eigenschaften geführt, die die Mischungszusammensetzung gemäß Erfindung für neue Anwendungsfelder geeignet macht. So eignen sie sich nicht nur hervorragend als Zusatzmittel für wässrige Suspensionen anorganischer und organischer Feststoffe auf Basis mineralischer oder bituminöser Bindemittel oder ganz allgemein in den Bereichen der keramischen Massen, Feuerfestmassen sowie Ölfeldbaustoffe und sie sind auch nicht auf die stabilisierenden Eigenschaften der Co- und Terpolymere gemäß Komponente II beschränkt, die sie insbesondere in niedriger Dosierung in Pigment-haltigen Anstrichstoffen, Putzen, Klebemörteln, Spachtelmassen, Fugenfüllern, Spritzbeton, Fliessbeton, selbstverdichtendem Beton, Unterwasserbeton und Unterwassermörteln als geeignet erscheinen lassen, sondern sie sind vor allem unabhängig vom bauchemischen Bereich aufgrund ihrer hervorragenden dispergierenden Eigenschaften auch in Anwendungsgebieten der Polymer- und Kunststoff-verarbeitenden Industrie, der Kosmetik, in elektrochemischen Anwendungsgebieten aber auch in der Landwirtschaft geeignet. Besonders wertvoll sind die beanspruchten Mischungszusammensetzungen aber auch im angestammten Anwendungsgebiet der Komponente I und der Komponente II, nämlich dem bauchemischen Bereich, da sie vor allem als Casein-Ersatz die üblicherweise als problematisch angesehene Kombination einer guten verflüssigenden Wirkung mit einer gleichzeitigen ausgeprägten Stabilität in hervorragender Weise vermitteln können.

Die nachfolgenden Beispiele verdeutlichen die Vorteile der Mischungszusammensetzung gemäß Erfindung und der damit verbundenen Verwendungsvielfalt.

### Beispiele

### 1. Pigmentdispergierung:

a) Zur Dispergierung und Stabilisierung von Eisenoxid-Pigmentpulvern in Wasser, die zur Baustoffeinfärbung benutzt werden, werden Mischungen eingesetzt, die 0,11 Gew-% - 1,02 Gew-% MelPers VP 4335 fest (als Komponente I) und 0,05 Gew-% - 0,2 Gew-% MelVis STAB VP 13/015 fest (als Komponente II) enthalten. Als Eisenoxide werden solche vom Typ Hämatit, Goethit und Magnetit sowie deren Abmischungen eingesetzt. Die gemäß Richtrezepturen der Tabelle 1 hergestellten Dispersionen sind 6 Monate lagerstabil. Die Richtrezepturen werden durch Dissolverdispergierung (20 Minuten bei 3500 Upm) hergestellt.

**Tabelle 1 (Eisenoxid-Dispersionen):**

| Angaben in Gew.-% | Bayferrox 110 | Bayferrox 920 | Bayferrox 318 | Ferroxon 430 | Ferroxon 422 | Ferroxon 510 |
|---|---|---|---|---|---|---|
| Wasser | 32,40 | 46,20 | 39,00 | 32,10 | 32,10 | 46,15 |
| NaOH, 50% | 0,20 | 0,30 | 0,20 | 0,40 | 0,40 | 0,50 |
| Entschäumer¹⁾ | 0,20 | 0,20 | 0,20 | 0,20 | 0,20 | 0,20 |
| Konservierer²⁾ | 0,20 | 0,20 | 0,20 | 0,20 | 0,20 | 0,20 |
| MeIVis STAB VP 13/015³⁾ | 0,10 | 0,20 | 0,05 | 0,20 | 0,20 | 0,05 |
| MelPers VP 4335⁴⁾ | 1,90 | 2,90 | 0,35 | 1,90 | 1,90 | 2,90 |
| Pigment⁶⁾ | 65,00 | 50,00 | 60,00 | 65,00 | 65,00 | 50,00 |
| | | | | | | |
| *Summe* | *100,00* | *100,00* | *100,00* | *100,00* | *100,00* | *100,00* |
| | | | | | | |
| | | | | | | |
| | | | | | | |
| pH-Wert⁶⁾ | 8,5 - 10 | 8,5 - 10 | 8,5 -10 | 8,5 - 10 | 8,5 - 10 | 8,5 - 10 |
| Viskosität⁷⁾ [mPas] | 1000-1500 | 800-1200 | 1200-1700 | 800-1200 | 800-1200 | 1000-1500 |

| | | | | | | |
|---|---|---|---|---|---|---|
| ¹⁾ Entschäumer: typischer Mahlgutentschäumer, z.B. TEGO Foamex 810 (Tego Chemie Service GmbH). ²⁾ Topfkonservierung: entsprechend den Angaben des Pigmentherstellers, z.B. Acticide MBS (THOR GmbH). ³⁾ Entsprechend Komponente II, 100 % Feststoff (Degussa Construction Polymers GmbH). ⁴⁾ Entsprechend Komponente I, 35 % Feststoff-Formulierung in Wasser (Degussa Construction Polymers GmbH). ⁵⁾ Entsprechendes Pigment von Bayer (Bayferrox) bzw. Schlieper & Heyng (Ferroxon). ⁶⁾ Empfohlener pH-Wert (23°C). ⁷⁾ Empfohlener Viskositätsbereich der frischen Dispersion, Brookfield, 23°C, Spindel R2/R3, 50 Upm. | | | | | | |

Der typische Viskositätsverlauf von frischer zu gealterter Dispersion ist in Abbildung 1 anhand von zwei der genannten Richtformulierungen an Bayferrox 110 bzw. 920 gezeigt: 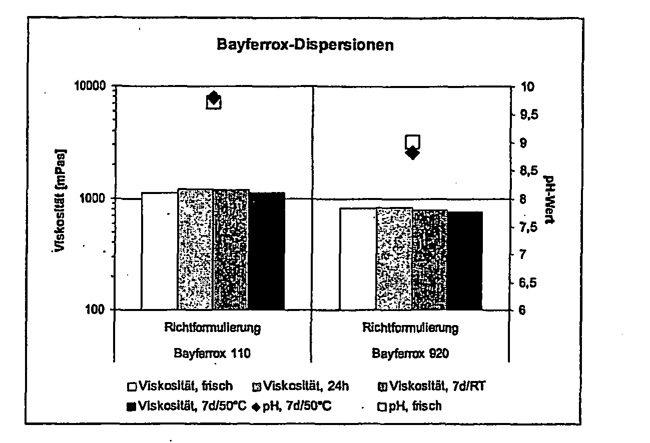
Das rheologische Profil der Dispersionen zeigt strukturviskoses (abnehmende Viskosität bei zunehmender Scherrate) bis leicht thixotropes (unterschiedlicher Viskositätsverlauf für steigende und fallende Scherrate) Verhalten. Die Höhe der Schubspannung korrespondiert weitgehend mit dem Feststoffgehalt der jeweiligen Dispersion (vgl. Abbildung 2 anhand von zwei der genannten Richtformulierungen an Bayferrox 110 bzw. 920).
Abbildung 2 (Viskosität (schwarz) und Schubspannung (grau) in Abhängigkeit von 1. steigender - geschlossene Symbole - und 2. fallender - offene Symbole - Scherrate): 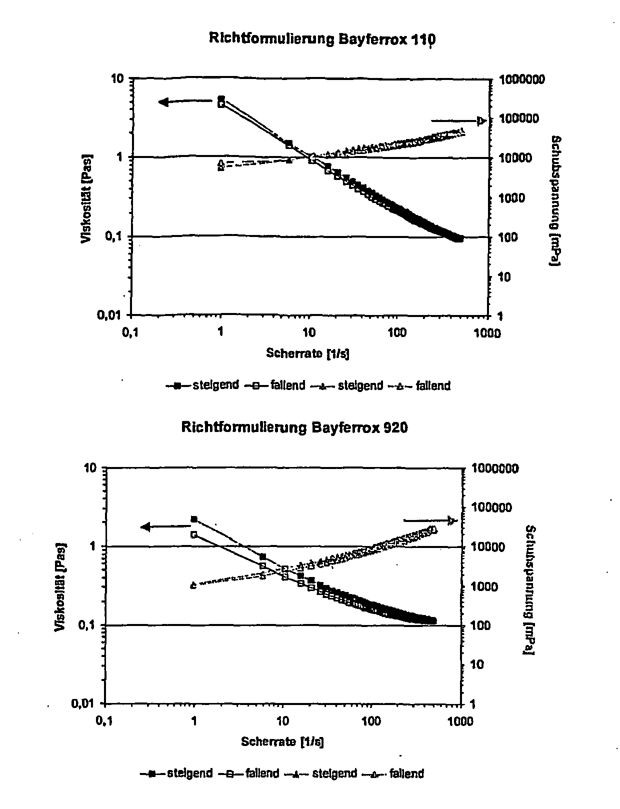
b) Für eine Dispergierung von Titandioxiden wird die Mischung von 0,1 Gew-% - 10 Gew-% MelPers 9360 fest (als Komponente I) und 0,005 Gew-% - 0,5 Gew-% MelVis STAB 2344 (als Komponente II) bezogen auf Pigment eingesetzt. Es werden monodisperse, hochgefüllte, langzeitstabile Dispersionen erhalten, die frei von Reagglomerationen sind und damit höchsten optischen Anforderungen entsprechen. Dabei ist es unerheblich, ob Titandioxide vom Rutil-Typ für Direktanreibungen (Bsp. A) bzw. Pigmentpastenpräparationen (Bsp. B) für beispielsweise die Formulierung von Farben und Lacken oder Titandioxide vom Anatas-Typ (Bsp. C) für beispielsweise die Mattierung von Papierstreichfarben verwendet werden. Auch das Herstellverfahren (Sulfat- oder Chloridverfahren) und die Oberflächenbehandlung (Aluminium- /Zirkon- / Siliziumoxide / organisch) des Pigments sind für die Stabilität und Performance der erhaltenen Titandioxid-Dispersion unerheblich. Die in Tabelle 2 aufgeführten Richtrezepturen werden durch DissolverDispergierung (20 Minuten bei 3500 Upm) hergestellt. Eine anschließende Vermahlung der Bsp. A und B in einer Perlmühle (30 Minuten, 2/3 Dispersion, 1/3 Perlen, 5000 Upm) gewährleistet höchsten Glanz und maximale Deckkraft.

**Tabelle 2 (Titandioxid-Dispersionen):**

| Angaben in Gew.-% | A⁸⁾ | B | C |
|---|---|---|---|
| Wasser | 28,80 - 28,20 | 22,94 - 19,90 | 45,24 |
| NaOH, 50% | 0,10 | 0,10 | 0,05 |
| Entschäumer¹⁾ | 0,50 | 1,00 | 0,50 |
| Konservierer²⁾ | | 0,20 | |
| MelVis STAB VP 2344³⁾ | 0,10 - 0,20 | 0,01 - 0,05 | 0,01 |
| MelPers 9360⁴⁾ (Ware) | 0,50 - 1,00 | 5,75-8,75 | 4,20 |
| Pigment⁵⁾ | 70,00 | 70,00 | 50,00 |
| | | | |
| *Summe* | *100,00* | *100,00* | *100,00* |
| pH-Wert⁶⁾ | 8,0 - 9,0 | | |
| Viskosität⁷⁾ [mPas] | 800 - 2000 | | |

| | | | |
|---|---|---|---|
| ¹⁾ Entschäumer: typischer Mahlgutentschäumer, z.B. TEGO Foamex 830. ²⁾ Topfkonservierung; entsprechend den Angaben des Pigmentherstellers, z.B. Acticide MBS (Thor GmbH). ³⁾ Entsprechend Komponente II, 100% Feststoff (Degussa Construction Polymers GmbH). ⁴⁾ Entsprechend Komponente I, 60% Feststoff-Formulierung in Wasser (Degussa Construction Polymers GmbH). ⁵⁾ Entsprechendes Pigment vom Rutil-Typ (für A und B), z.B. Tioxide TR 92 (Huntsman), Kemira 660 (Kemira), Kronos 2190 (Kronos), Ti-Pure R-706 (DuPont), oder vom Anatas-Typ (für C), z.B. Kronos 1077 (Kronos). ⁶⁾ Empfohlener pH-Wert (23°C). ⁷⁾ Empfohlener Viskositätsbereich der frischen Dispersion, Brookfield, 23°C, Spindel R2/R3, 20 Upm. ⁸⁾ Beispielsformulierung zur sofortigen Weiterverarbeitung in einem Lack (Auflacken); z. B. 30 %ig in Neocryl XK 90 (DSM/NeoResins). | | | |

Abbildung 3 zeigt die Effektivität der Dispergierung von Titandioxid-Pigmenten (Bsp. A und B).
Abbildung 3 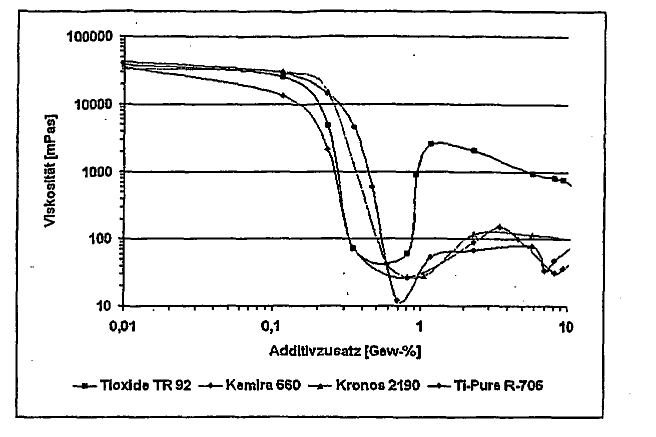
Abbildung 4 zeigt das Rheologieprofil einer langzeitstabilen Pigmentpaste B (70% Tioxide TR 92 / 8,75% MelPers 9360 / 0,01% MelVis STAB VP 2344). Die Pigmentpaste ist niedrigviskos, leicht strukturviskos und thixotrop (geschlossene Symbole = Scherrate steigend; offene Symbole = Scherrate fallend).
Abbildung 4 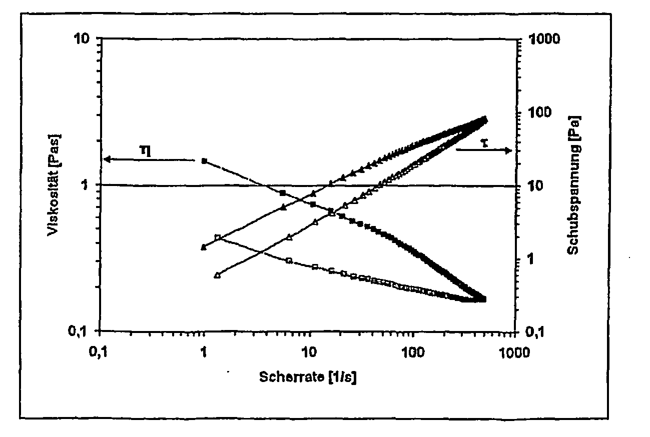
c) Pigmentdispersionen für transparente Beschichtungen (Titandioxid), Baustoffeinfärbungen (Spezialschwarz 100) und Spezialdruckfarben (Hostaperm Rot, Spezialschwarz 250) können ebenfalls kombiniert mit den Komponenten I und II formuliert werden. Die Dispersionen sind mindestens 3 Monate lagerstabil und sie verfügen bei einem pH-Wert zwischen 6,5 und 8,5 über eine Viskosität zwischen 800 und 1200 mPas (Brookfield, 23°C, Spindel R2/R3, 20 Upm):
- 50 Gew-% Titandioxid P 25 (Degussa AG) mit 2,00 Gew-% MelPers VP 3440Na fest (als Komponente I) und 0,20 Gew-% MelVis STAB VP 2344 fest (als Komponente II).
- 35 Gew-% Hostaperm Rot E3B (BASF) mit 10,50 Gew-% MelPers 9560 fest (als Komponente I) und 0,20 Gew-% MelVis STAB VP 1282 fest (als Komponente II).
- 35 Gew-% Spezialschwarz 100 (Degussa AG) mit 2,45 Gew-% MelPers VP 9360DEA fest (als Komponente I) und 0,10 Gew-% MelVis STAB VP 13/015 fest (als Komponente II).
- 35 Gew-% Spezialschwarz 250 (Degussa AG) mit 2,45 Gew-% MelPers 9560 fest (als Komponente I) und 0,10 Gew-% MelVis STAB VP 13/015 fest (als Komponente II).

Für den Einsatz der Pigmentdispersionen für bspw. Baustoffeinfärbungen wird der pH-Wert der Mischung entsprechend auf 8 - 10 angepasst. Ein Mahlgutentschäumer für gute Entschäumung während und nach der Dispergierung wird bei den Pigmentrußen zugesetzt (in der Regel 0,2 - 0,5% auf Gesamtformulierung, z.B. TEGO Foamex 810 - Tego Chemie Service GmbH). Eine Topfkonservierung der Pigmentpasten wird für eine sichere Lagerfähigkeit vorgenommen. Es wird grundsätzlich 20 min bei 3500 Upm vordispergiert und anschließend 30 Minuten in einer Perlmühle (2/3 Dispersion; 1/3 Perlen) bei 5000 Upm fertig dispergiert.
d) Füllstoffe: Füllstoffdispersionen für Flammschutz (Apyral 60), Druckfarben (Ultrafine ASP), Keramik, Baustoffe und Feuerfest (A-GK Bariumcarbonat) sowie Sol-Gel Dip-Coatings (Aerosil OX 50) können durch Kombination der Komponente I und der Komponente II mittels Dissolver (20 Minuten, 3500 Upm) für mindestens 3 Monate lagerstabil formuliert werden:
- 60 Gew-% Apyral 60 (Nabaltec) mit 1,80 Gew-% MelPers 2450 fest (als Komponente I) und 0,30 Gew-% MelVis STAB VP 1282 fest (als Komponente II); pH = 7,5-8,5; Viskosität (Brookfield, 23°C, Spindel R2/R3, 50 Upm) = 800 - 1500 mPas.
- 60 Gew-% Ultrafine ASP (Engelhard Corp.) mit 1,80 Gew-% MelPers 3400 fest (als Komponente I) und 0,10 Gew-% MelVis STAB VP 2344 fest (als Komponente II); pH = 4,5-5,5; Viskosität (Brookfield, 23°C, Spindel R2/R3, 50 Upm) = 800 -1500 mPas.
- 70 Gew-% Bariumcarbonat A-GK (Solvay Barium Strontium) mit 0,14 Gew-% MelPers 9360 fest (als Komponente I) und 0,15 Gew-% MelVis STAB VP 13/015 fest (als Komponente II); pH = 8,0-9,5; Viskosität (Brookfield, 23°C, Spindel R2/R3, 20 Upm) = 800 - 1500 mPas.
- 50 Gew-% Aerosil OX 50 (Degussa) mit 0,15 Gew-% MelPers VP 3440A fest (als Komponente I) und 0,05 Gew-% MelVis STAB VP 2344 fest (als Komponente II); pH = 8,5-9,5; Viskosität (Brookfield, 23°C, Spindel R2/R3, 20 Upm) = 600 -1000 mPas.

Bei Bedarf wird ein Mahlgutentschäumer (z.B. TEGO Foamex 810 - Tego Chemie Service GmbH) für gute Entschäumung während und nach der Dispergierung eingesetzt (in der Regel 0,2 - 0,5 Gew.-% auf Gesamtformulierung). Eine Topfkonservierung der Füllstoffpasten wird für eine sichere Lagerfähigkeit vorgenommen.

### 2. Casein-Ersatz

### Anwendungsbeispiele

- Melflux^{®} 1641 F und 2651 F (von Degussa Construction Polymers GmbH) sind PCE-basiertes Fließmittel entsprechend Komponente I der Erfindung.
- Starvis^{®} 4302 F und 3003 F (von Degussa Construction Polymers GmbH) sind Stabilisierer entsprechend der Komponente II der Erfindung.

### a) Test-Rezeptur

| Komponente | Anteil (Gew.-%) |
|---|---|
| OPC (CEM I 42,5 R) | 18,500 |
| CAC (70 % CA) | 11,500 |
| CaSO₄ (synthet. Anhydrit) | 6,500 |
| Quartzsand | 40,615 - 40,765 |
| Kalksteinpulver | 19,400 |
| Latex-Pulver | 2,000 |
| Komponente II (Starvis 3003F bzw. 4302F) | 0,05 - 0,20 |
| Li₂CO₃ | 0,100 |
| Entschäumer | 0,150 |
| Weinsäure | 0,035 |
| Zitronensäure | 0,150 |
| Schwundreduzierer | 0,600 |
| Komponente I (Melflux 2651F) (alternativ: Melflux 1461F + K, Na-Tartrat) | 0,250 (0,400) |
| Trockenmörtelmischung (gesamt) | 100,000 |
| Wasser | 20,000 |

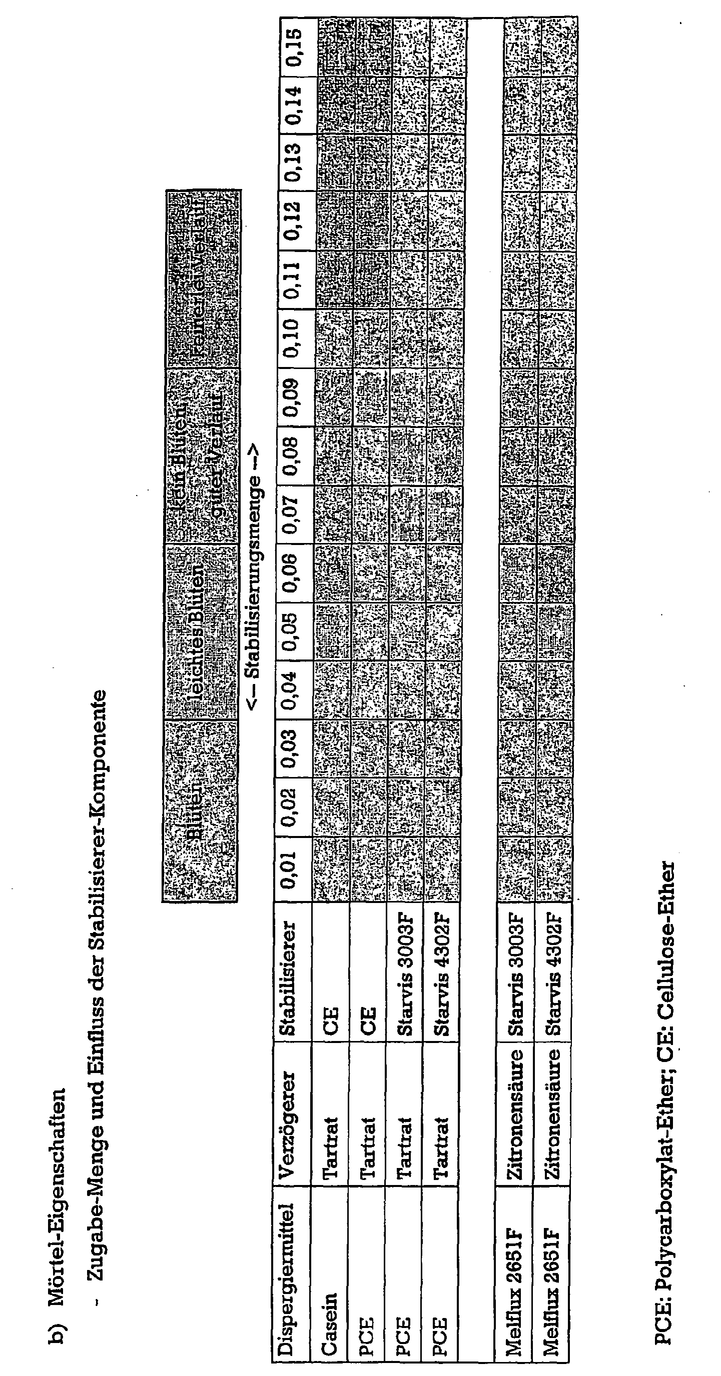

### Ergebnis:

- Casein: 0,30 bis 0,40 % btw
CE: 0,05 bis 0,10 % btw
Hohe Mengen Dispergiermittel; enger Wirkbereich des Stabilisierers
- Polycarboxylat-
Ether: 0,30 bis 0,40 % btw
CE: 0,09 bis 0,10 % btw
Hohe Menge Dispergiermittel; sehr enger Wirkbereich des Stabilisierers
- Melflux 2651 F: 0,10 bis 0,30 % btw
Starvis 3003 F oder
Starvis 4302 F: 0,05 bis 0,20 % btw
Geringe Menge Dispergiermittel; breiter Wirkbereich des Stabilisierers
Beurteilungskriterium war ein Verlauf von > 14,5 cm und kein Bluten
- Wassertoleranz; Anti-Absetz- und Blutungs-Eigenschaften Casein (0,30 - 40 %) + Cellulose-Ether (0,05 - 0,10 %) 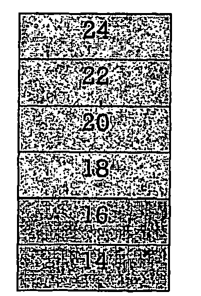 Angegeben sind jeweils Wassermengen in Ges.-% bezogen auf die Trockenmörtelmischung.
- Polycarboxlat-Ether (0,30 - 0,40 %) + Cellulose-Ether (0,09 - 0,10 %) 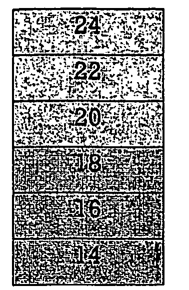 Angegeben sind jeweils Wassermengen in Ges.-% bezogen auf die Trockenmörtelmischung.
- Melflux^{®} 2651 F (0,10 - 0,30 %) + Starvis^{®} 3003 F oder 4302 F (0,05 - 0,20 %) 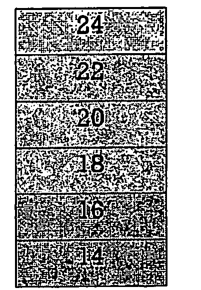 Angegeben sind jeweils Wassermengen in Gew.-% bezogen auf die Trockenmörtelmischung.
Bewertungskriterien:
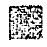 Bluten und Absetzen
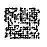 Leichtes Bluten
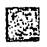 Kein Bluten; (Verlauf ≥ 14,5 cm) kein Absetzen
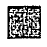 Kein Verlauf (Verlauf < 14,5 cm)

- Mischungvorgang
Während des Mischens wurde alle 15 sec eine Probe genommen und der Verlauf bestimmt. Casein-basierte Formulierungen benötigten mit 90 sec eine ca. 3 mal längere Mischzeit als Formulierungen mit den Komponenten I und II (Melflux^{®} 2651 F, Starvis 3003 F und 4302 F) (30 sec).

| Totalzeit | Verfahrensschritte (EN 1937) | Zeitbedarf |
|---|---|---|
| 0'00" - 0'30" | Pulverzugabe zum Wasser | 0" |
| 0'30" - 0'45" | Mischen (140 rpm) | 15" |
| 0'45" - 1'00" | Behälter- und Rührerreinigung; erste Verlaufsprobe | 15" |
| 1'00' - 1'15" | Mischen (285 rpm) | 30" |
| 1'15" - 1'30" | Verlaufsprobe | 30" |
| anschließend | alle 15 sec Probennahme, weitere 15 sec mischen | etc. |

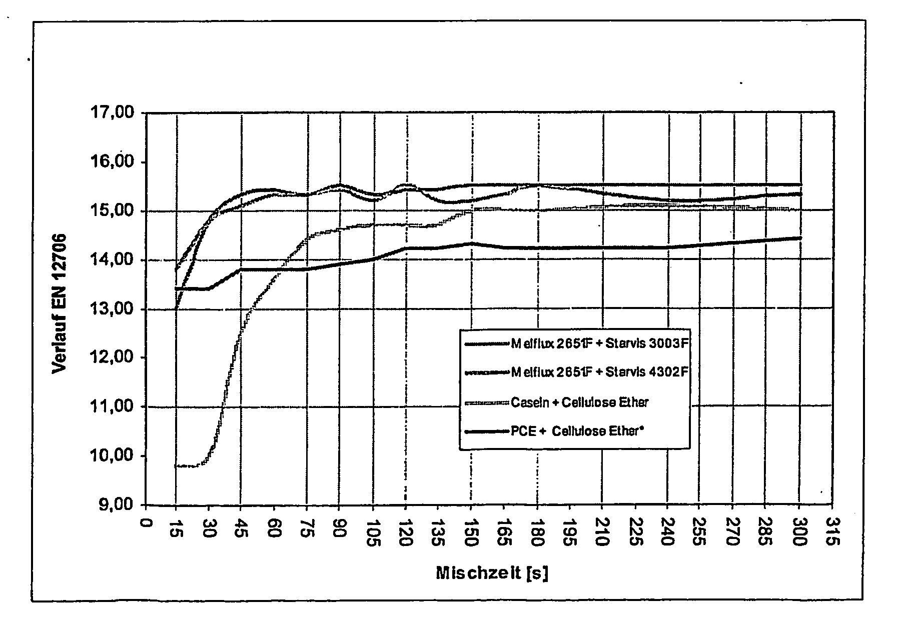

- Zeitabhängiger Verlauf (EN 12706) 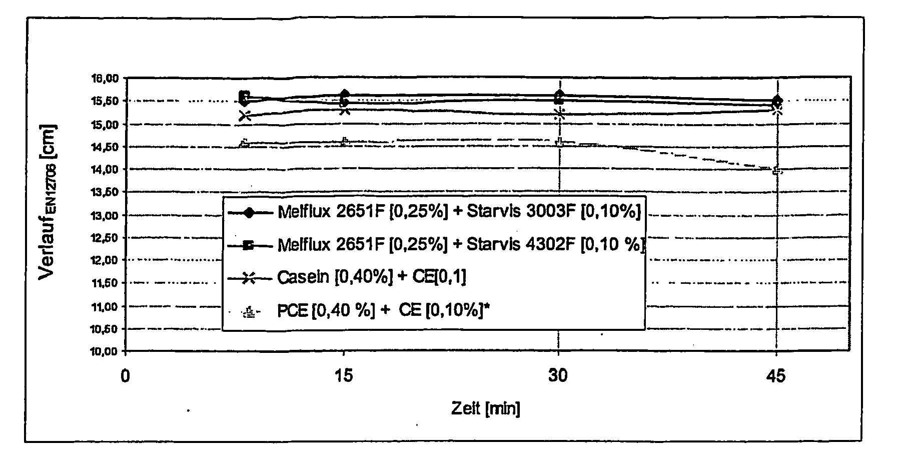 Ergebnis:
Verlaufseigenschaften sind hauptsächlich abhängig vom frühzeitigen Ansteifen der Bindemittel-Komponente. Die thixotropen Effekte des Stabilisierers sind auf ein Minimum reduziert. Da innerhalb des gemessenen Zeitraums keine Fließmaßveränderungen zu beobachten waren, waren die Verlaufseigenschaften der stabilen Mörtel nicht durch die Stabilisierer-Komponente beeinflusst.
Sogar bei geringen Anteilen von Melflux 2651 F als Komponente I (0,25 Gew.-%) sind die Verlaufseigenschaften gegenüber den Casein-basierten Formulierungen deutlich verbessert.

- Selbstheilungseigenschaften
Die Austestung erfolgte gemäß dem Messerschnitt-Test* entsprechend einer siebenstufigen Bewertungsskala: (*Messerschnitt-Test = die Oberfläche der ausgegossenen Masse wird verletzt und die "Selbstheilung", d.h. das Wiederzusammenlaufen bewertet)
Probe:

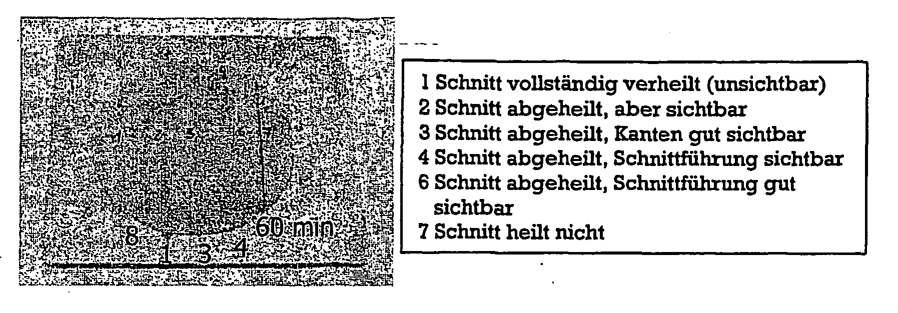

| | 8 min | 15 min | 30 min | 45 min | 60 min |
|---|---|---|---|---|---|
| Casein /Cellulose Ether | 1 | 1 | 2 | 3 | 5 |
| PCE / Cellulose Ether | 1 | 1 | 2 | 3 | 5 |
| Melflux 2651F / Starvis 3003F | 1 | 1 | 2 | 2 | 4 |
| Melflux 2651F/ Starvis 4302F | 1 | 1 | 2 | 2 | 4 |

- Erstarrungszeiten (mit Vicat-Nadelgerät) 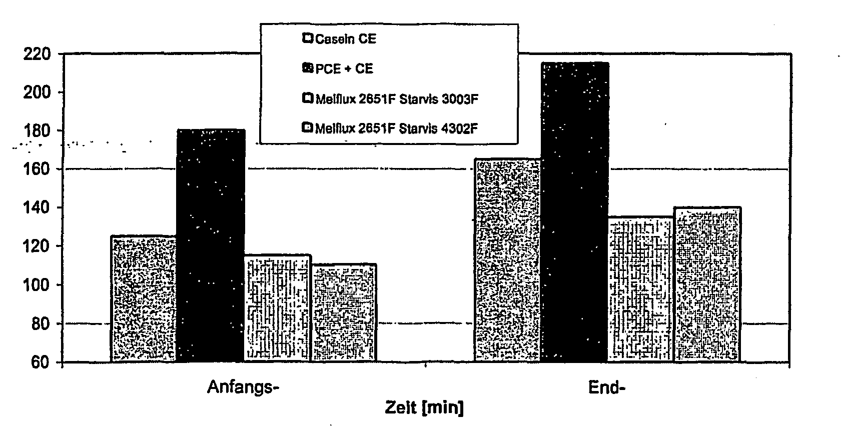 Die verzögernden Effekte von Casein und Cellulose-Ether (Vergleich) werden durch die Kombination von Melflux 2651 F mit Starvis 3003 F (Erfindung) bzw. 4302 F vollständig ausgeglichen.
c) Eigenschaften im ausgehärteten Zustand
   - Druckfestigkeit
      Die Druckfestigkeit wurde an Prismen (4x4x16 cm³) bestimmt. 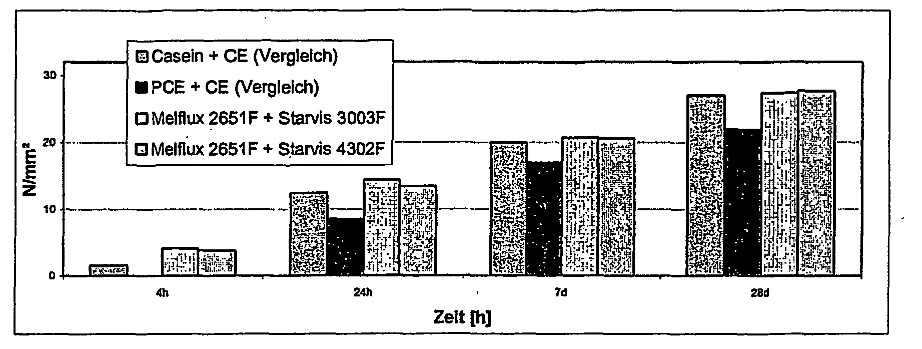 Die kombinierte Verwendung von Melflux^{®} 2651F und Starvis^{®} 3003F bzw. 4302F führt zu einer deutlichen Frühfestigkeit (nach 4 h) im Vergleich zu Casein- und Cellulose-Ether-haltigen Mörteln. Zusätzlich ist damit eine frühere Begehbarkeit und ein früheres Aufbringen von Beschichtungen/Belägen möglich.
   - Biegezugfestigkeit
      Die Biege- und Zugfestigkeit wurde an Prismen (4x4x 16 cm³) bestimmt.

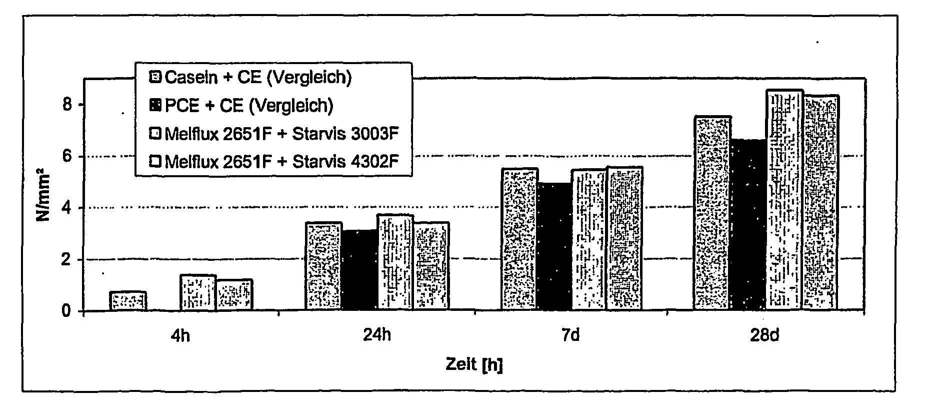

## Patentansprüche

1. Mischungszusammensetzung mit dispergierender Wirkung enthaltend
I) Copolymere auf Basis von ungesättigten Mono- oder Dicarbonsäure-Derivaten und Oxyalkylenglykol-Alkenylethern und
II) wasserlösliche sulfogruppenhaltige Co- und Terpolymere mit einem zahlenmittleren Molekulargewicht von 50 000 bis 20 000 000 g/Mol, worin die Komponente I)
a) 51 bis 95 Mol-% der Baugruppen der Formel Ia und/oder Ib und/oder Ic 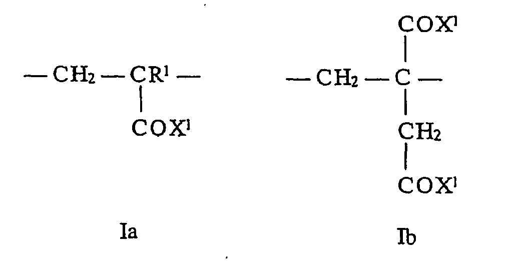 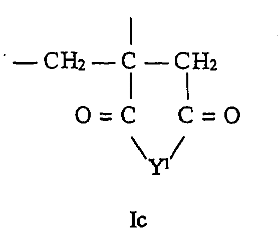 wobei R¹ = Wasserstoff oder ein aliphatischer Kohlenwasserstoffrest mit 1 bis 20 C-Atomen
X¹ = - OMₐ¹, - O - (CₘH₂ₘO)ₙ - R², - NH - (CₘH₂ₘO)ₙ - R²
M¹ = Wasserstoff, ein ein- oder zweiwertiges Metallkation,
Ammoniumion, ein organischer Aminrest,
a = ½ oder 1
R² = Wasserstoff, ein aliphatischer Kohlenwasserstoffrest mit
1 bis 20 C-Atomen, ein cycloaliphatischer
Kohlenwasserstoffrest mit 5 bis 8 C-Atomen, ein ggf.
substituierter Arylrest mit 6 bis 14 C-Atomen.
Y¹ = O, NR²
m = 2 bis 4 und
n = 0 bis 200
bedeuten,
b) 1 bis 48,9 Mol-% Baugruppe der allgemeinen Formel II 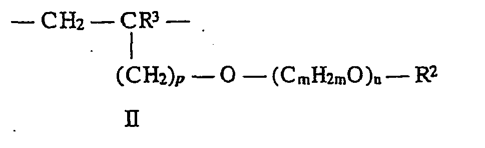 wobei R³ für Wasserstoff oder einen aliphatischen
Kohlenwasserstoffrest mit mit 1 bis 5 C-Atomen
p für 0 bis 3
stehen und R², m und n die oben genannte Bedeutung besitzen,
c) 0,1 bis 5 Mol-% Baugruppen der Formel IIIa oder IIIb 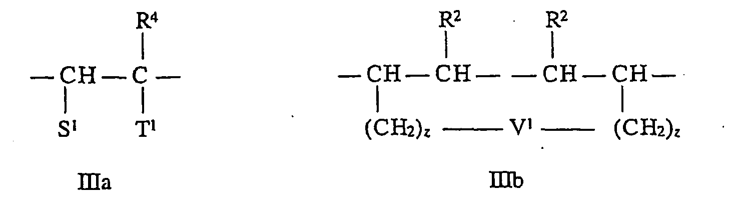 wobei S¹= -H, - COOMₐ¹, - COOR⁵
T¹ = -U¹ - 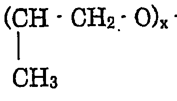 - (CH₂ - CH₂ - O)_{y} - R⁶
- W¹ - R⁷
- CO - [NH - (CH₂)₃]*ₛ*- W¹ - R⁷
-CO-O-(CH₂)*_{z}* -W¹-R⁷
- (CH₂)*_{z}*- V¹ - (CH₂)*_{z}* - CH = CH - R²
- COOR⁵ im Falle von S¹ = - COOR⁵ oder COOMₐ¹
U¹ = - CO - NH -, - O -, - CH₂O -
U²=-NH-CO-, -O-, -OCH₂-
V¹=-O-CO-C₆H₄-CO-O- oder -W¹-
W¹= 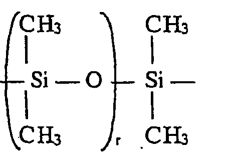 R⁴ = H, CH₃
R⁵ = aliphatischer Kohlenwasserstoffrest mit 3 bis 20
C-Atomen, cycloaliphatischer Kohlenwasserstoffrest mit
5 bis 8 C-Atomen, Arylrest mit 6 bis 14 C-Atomen
R⁶ = R², 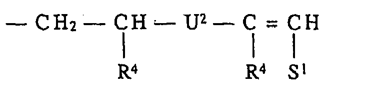 R⁷ = R², 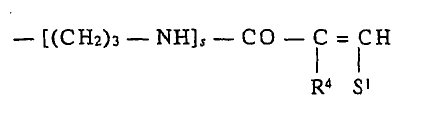 r = 2 bis 100
s = 1, 2
z = 0 bis 4
x = 1 bis 150
y = 0 bis 15
bedeuten sowie
d) 0 bis 47,9 Mol Baugruppen der allgemeinen Formel IVa und/oder IVb 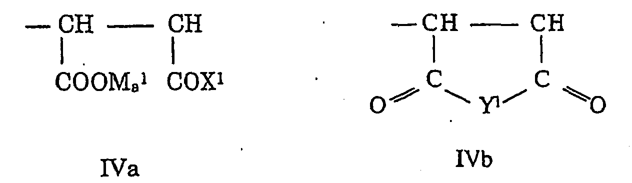 mit der oben angegebenen Bedeutung für a, M¹, X¹ und Y¹, enthält.

2. Mischungszusammensetzung nach Anspruch 1, **dadurch gekennzeichnet, dass** die Komponente II
a) 3 bis 96 Mol-% Baugruppen der Formel (V) 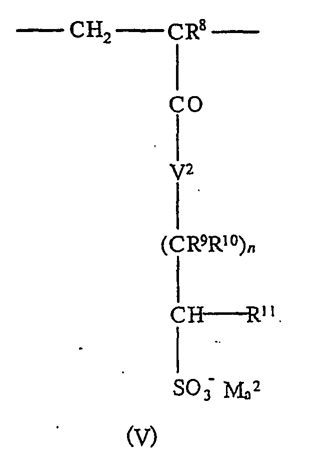 wobei R⁸ = Wasserstoff oder Methyl
R⁹, R¹⁰, R¹¹ = Wasserstoff, aliphatischer Kohlenwasserstoffrest mit 1 bis 6 C-Atomen, ggf. mit Methylgruppen substituierter Phenylrest
V² = NH oder Sauerstoff
M² = Wasserstoff, ein- oder zweiwertiges Metallkation, Ammonium oder ein organischer Aminrest
n = 1 bis 5
a = ½ oder 1
bedeuten,
b) 3 bis 96 Mol-% Baugruppen der Formel (VI) 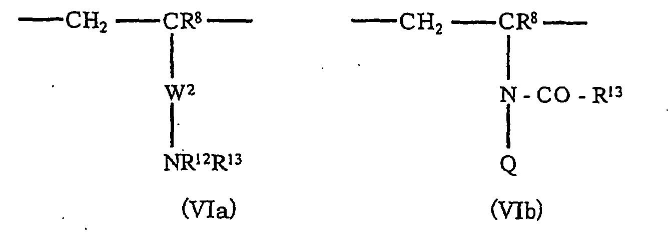 worin W² = -CO-, -CO(O)-(CH₂)*ₓ*- , -CO-NR⁹-(CH₂)*ₓ*-
x = 1 bis 6
R¹² und R¹³ = Wasserstoff, ggf. substituierter aliphatischer Kohlenwasserstoffrest mit 1 bis 20 C-Atomen, cycloaliphatischer Kohlenwasserstoffrest mit 5 bis 8 C-Atomen, Arylrest mit 6 bis 14 C-Atomen bedeuten und
Q = Wasserstoff sowie -CHR¹²R¹⁴ bedeuten sowie im Falle von
Q = H R¹² und R¹³ in (VIb) zusammen eine -CH₂-(CH₂)*_{y}-*Methylengruppe mit y = 1 bis 4 bilden, R¹⁴ = Wasserstoff, aliphatischer Kohlenwasserstoffrest mit 1 bis 4 C-Atomen, - COOH oder -COOM²ₐ darstellt und
R⁸, R⁹, M² und a oben genannte Bedeutung besitzen,
und
c) bis 75 Mol-% Baugruppen der Formeln (VII) 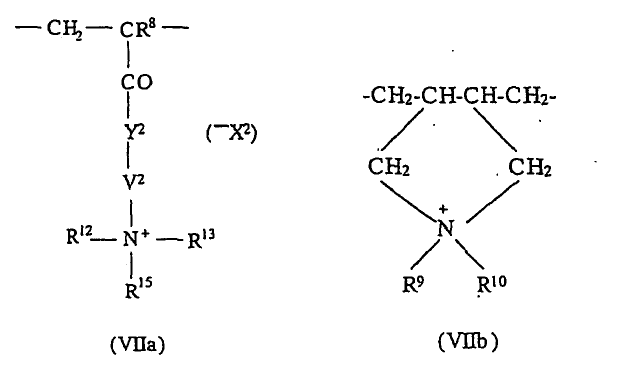 worin Y² = O, NH oder NR¹²
V² = -(CH₂)*ₓ*-, 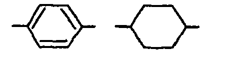 R¹⁵ = R12 bzw. R¹³, -(CH₂)ₓ-SO₃^{⊖}M²ₐ, 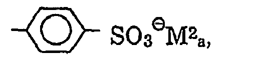 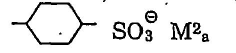 X² = Halogen, C₁- bis C₄-Alkylsulfat oder C₁- bis C₄-Alkylsulfonat
d) und/oder bis 50 Mol-% Baugruppen der Formel (VIII) 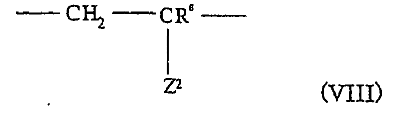 mit Z² = -COO(CₘH₂ₘO)ₙ-R¹⁶, -(CH₂)ₚ-O(CH₂CHW³O)ᵣ-(CₘH₂ₘO)ₙ-R¹⁶,
W3 = H, CH₃, C₂H₅,
r = 0 bis 100
R¹⁶ = H, 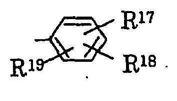
wobei mindestens ein Rest R¹⁷, R¹⁸ und/oder R¹⁹ vertreten sein muss, sowie gesättigter oder ungesättigter, linearer oder verzweigter, aliphatischer Kohlenwasserstoffrest mit 1 bis 40 C-Atomen
R¹⁷ = H, C₁-C₄-Alkyl-, Phenyl-, Benzyl-, C₁-C₄-Alkoxy, Halogen, Cyano, -COOH, -COOR¹², -CO-NH₂, -OCOR¹²
R¹⁸ = Arylalkylgruppe mit C₁-C₁₂-Alkyl- und C₆-C₁₄-Arylrest
R¹⁹ = Alkylarylgruppe mit C₁-C₁₂-Alkyl- und C₆-C₁₄-Arylrest
m = 2 bis 4
n = 0 bis 200
p = 0 bis 20
sowie R⁸ und R¹² oben genannte Bedeutung besitzen, enthält.

3. Mischungszusammensetzung nach Anspruch 1 oder 2, **dadurch gekennzeichnet, dass** sie die Komponente I in Anteilen von 0,05 bis 50 Gew.-% und die Komponente II in Anteilen von 0,01 bis 10 Gew.-%, jeweils als Feststoff, enthält.

4. Mischungszusammensetzung nach einem der Ansprüche 1 bis 3, **dadurch gekennzeichnet, dass** in Komponente I R¹ einen Methylrest darstellt.

5. Mischungszusammensetzung nach einem der Ansprüche 1 bis 4, **dadurch gekennzeichnet, dass** in Komponente I M¹ ein ein- oder zweiwertiges Metallkation ausgewählt aus der Gruppe Natrium-, Kalium-, Calcium- oder Magnesiumionen bedeutet.

6. Mischungszusammensetzung nach einem der Ansprüche 1 bis 5, **dadurch gekennzeichnet, dass** in Komponente I im Falle von R² = Phenyl der Phenylrest noch durch Hydroxyl-, Carboxyl- oder Sulfonsäure-Gruppen substituiert ist.

7. Mischungszusammensetzung nach einem der Ansprüche 1 bis 6, **dadurch gekennzeichnet, dass** in Komponente I in der Formel II *p*= 0 oder 1 und m = 2 bedeuten.

8. Mischungszusammensetzung nach einem der Ansprüche 1 bis 7, **dadurch gekennzeichnet, dass** die Komponente I 55 bis 75 Mol-% Baugruppen der Formel Ia und/oder Ib und/oder Ic, 19,5 bis 39,5 Mol-% Baugruppen der Formel II, 0,5 bis 2 Mol-% Baugruppen der Formel IIIa und/oder IIIb sowie 5 bis 20 Mol-% Baugruppen der Formel IVa und/oder IVb enthält.

9. Mischungszusammensetzung nach einem der Ansprüche 1 bis 8, **dadurch gekennzeichnet, dass** die Komponente I zusätzlich bis zu 50 Mol-%, insbesondere bis zu 20 Mol-%, bezogen auf die Summe der Baugruppen der Formel I, II, III und IV Baugruppen enthält, deren Monomere ein Vinyl- oder (Meth-) Acrylsäure-Derivat darstellt.

10. Mischungszusammensetzung nach Anspruch 9, **dadurch gekennzeichnet, dass** als monomeres Vinylderivat Styrol, α-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure oder Vinylphosphonsäure verwendet wurde.

11. Mischungszusammensetzung nach Anspruch 9, **dadurch gekennzeichnet, dass** als monomeres (Meth-)Acrylsäurederivat Hydroxyalkyl(meth)acrylate, Acrylamid, Methacrylamid, AMPS, Methylmethacrylat, Methylacrylat, Butylacrylat oder Cyclohexylacrylat eingesetzt wurde.

12. Mischungszusammensetzung nach einem der Ansprüche 1 bis 11, **dadurch gekennzeichnet, dass** die Komponente I ein mittleres Molekulargewicht von 1 000 bis 200 000 g/mol aufweist.

13. Mischungszusammensetzung nach einem der Ansprüche 1 bis 12,
**dadurch gekennzeichnet, dass** in Komponente II das ein oder zweiwertige Kation ein Natrium-, Kalium-, Calcium- oder Magnesium-Ion darstellt und dass X = Chlor, Brom, Sulfat oder Methylsulfat darstellt.

14. Mischungszusammensetzung nach einem der Ansprüche 1 oder 13, **dadurch gekennzeichnet, dass** in Komponente II die Baugruppe a) aus 2-Acrylamido-2-methylpropansulfonsäure (AMPS) oder deren Salzen besteht.

15. Mischungszusammensetzung nach einem der Ansprüche 1 bis 14, **dadurch gekennzeichnet, dass** in Komponente II bis zu 50 Mol-% der Baugruppen a), b) oder c) durch Struktureinheiten ersetzt sind, die sich von Acrylamid- oder N,N-Dimethylacrylamid-Monomeren ableiten.

16. Mischungszusammensetzung nach einem der Ansprüche 1 bis 15, **dadurch gekennzeichnet, dass** in Komponente II bis zu 50 Mol-% der Baugruppen a) durch andere sulfogruppenhaltige Struktureinheiten ersetzt sind, die sich von Methallylsulfonsäure- oder Allylsulfonsäure-Monomeren ableiten.

17. Mischungszusammensetzung nach einem der Ansprüche 1 bis 16, **dadurch gekennzeichnet, dass** in Komponente II die organischen Aminreste vorzugsweise substituierte Ammoniumgruppen darstellen, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen.

18. Mischungszusammensetzung nach einem der Ansprüche 1 bis 17, **dadurch gekennzeichnet, dass** in Komponente II die Kohlenwasserstoff- oder Arylreste von R¹² und R¹³ noch mit Hydroxyl-, carboxyl- oder Sulfonsäuregruppen substituiert sind.

19. Mischungszusammensetzung nach einem der Ansprüche 1 bis 17, **dadurch gekennzeichnet, dass** die Komponente II aus 30 bis 80 Mol-% der Baugruppe a), 5 bis 55 Mol-% der Baugruppe b), 2 bis 30 Mol-% der Baugruppe c) und/oder 0,2 bis 15 Mol-% der Baugruppe d) besteht.

20. Mischungszusammensetzung nach einem der Ansprüche 1 bis 19, **dadurch gekennzeichnet, dass** in Komponente II der molare Anteil der Baugruppe c) um mindestens 5 Mol-% niedriger ist als der molare Anteil der Baugruppe a).

21. Mischungszusammensetzung nach einem der Ansprüche 1 bis 20, **dadurch gekennzeichnet, dass** die Komponente II ein zahlenmittleres Molekulargewicht von 50 000 bis 10 000 000 g/Mol aufweist.

22. Mischungszusammensetzung nach einem der Ansprüche 1 bis 21, **dadurch gekennzeichnet, dass** die Komponente II noch zusätzlich 0,0001 bis 50 Mol-% der Baugruppen e) enthält, die sich von mono-, di- und triolefenischen polymerisationsfähigen Verbindungen ableiten.

23. Mischungszusammensetzung nach Anspruch 22, **dadurch gekennzeichnet, dass** die diolefenischen Verbindungen aus Diacrylat- oder Dimethylacrylatestern bestehen.

24. Mischungszusammensetzung nach Anspruch 22, **dadurch gekennzeichnet, dass** als triolefinische Monomere Trimethylolpropantriacrylat und Triallylisocyanurat eingesetzt werden.

25. Mischungszusammensetzung nach Anspruch 22, **dadurch gekennzeichnet**, das die monoolefinischen Verbindungen Acryl- oder Vinylderivate darstellen.

26. Mischungszusammensetzung nach einem der Ansprüche 1 bis 25, **dadurch gekennzeichnet, dass** die Komponente II bestehend aus den Baugruppen a), b), c) und/oder d) noch bis zu 50 Mol-%, insbesondere bis zu 20 Mol-%, bezogen auf die Summe der Baugruppen a), b), c) bzw. d) noch eine weitere Baugruppe f) auf Basis der Formel (IX) enthalten 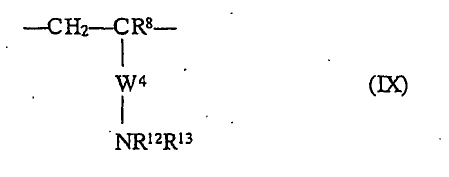 worin
W⁴ = -CO-O-(CH₂)_{q}-, -CO-NR⁹-(CH₂)_{q}-
q = 1 bis 6 darstellen und
R⁸, R⁹, R¹² und R¹³ die oben genannte Bedeutung besitzen.

27. Mischungszusammensetzung nach einem der Ansprüche 1 bis 26, **dadurch gekennzeichnet, dass** bis zu 50 % der Baugruppe a) von Komponente II durch den Baustein g) gemäß Formel (X) abgeleitet von sulfonsäurehaltigen Betainmonomeren ersetzt ist 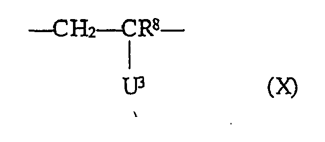 worin
U³ = 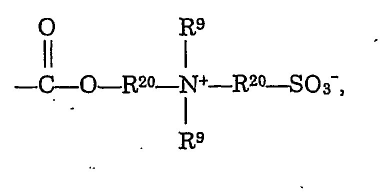 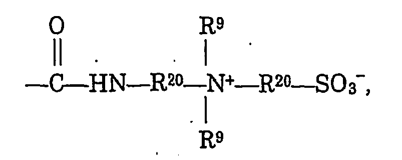 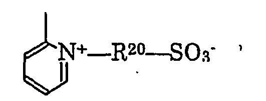 R²⁰ = 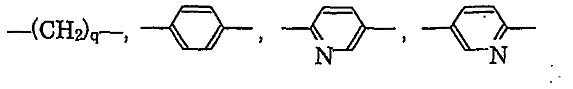 darstellen sowie
R⁸, R⁹ und q die oben genannte Bedeutung besitzen.

28. Mischungszusammensetzung nach einem der Ansprüche 1 bis 27,
**dadurch gekennzeichnet, dass** die Komponente II noch bis zu 0,1 Mol-% bezogen auf die jeweiligen Summen der Baugruppen a), b), c), d), e), f) und g) einer Vernetzer-Komponente ausgewählt aus der Gruppe Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat enthalten.

29. Mischungszusammensetzung nach einem der Ansprüche 1 bis 28, **dadurch gekennzeichnet, dass** sie die Komponenten I und II vorgemischt enthält.

30. Mischungszusammensetzung nach einem der Ansprüche 1 bis 29, **dadurch gekennzeichnet, dass** sie in viskoser und besonders bevorzugt in flüssiger Form vorliegt.

31. Mischungszusammensetzung nach einem der Ansprüche 1 bis 30, enthaltend organische und/oder anorganische Pigmente und Füllstoffe.

32. Verwendung der Mischungszusammensetzung nach einem der Ansprüche 1 bis 31 in bauchemischen Anwendungen, insbesondere als Zusatzmittel für wässrige Baustoffsysteme, besonders bevorzugt enthaltend hydraulische Bindemittel, wie Zement, Kalk, Gips, Anhydrit usw.

33. Verwendung nach Anspruch 32 in keramischen Systemen und in wasserbasierenden Anstrich- und Beschichtungssystemen.

34. Verwendung der Mischungszusammensetzung nach Anspruch 32 als Fließmittel, insbesondere mit gleichzeitig stabilisierender Wirkung.

35. Verwendung nach Anspruch 34 in selbstverlaufenden Ausgleichs- und Spachtelmassen, besonders bevorzugt als Casein-Ersatz.

## Claims

1. Mixture composition having a dispersing effect, containing
I) copolymers based on unsaturated mono- or dicarboxylic acid derivatives and oxyalkylene glycol alkenyl ethers and
II) water-soluble co-and terpolymers containing sulpho groups and having a number average molecular weight of 50 000 to 20 000 000 g/mol, in which the component I) contains
a) 51 to 95 mol% of structural groups of the formula Ia and/or Ib and/or Ic 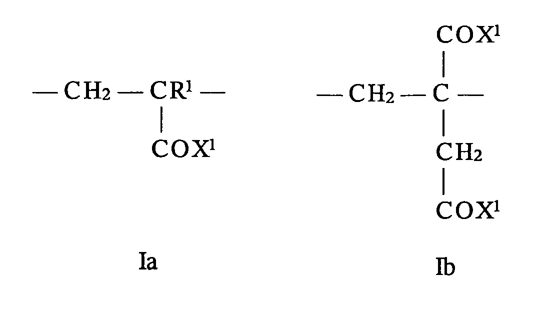 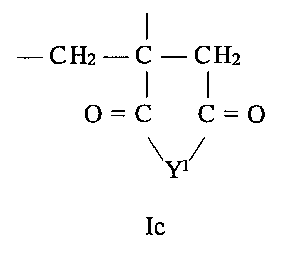 R¹ denoting hydrogen or an aliphatic hydrocarbon radical having 1 to 20 C atoms
X¹ denoting - OMₐ¹, - O - (CₘH₂ₘO)ₙ - R², - NH - (CₘH₂ₘO)ₙ - R²,
M¹ denoting hydrogen, a monovalent or divalent metal cation, an ammonium ion or an organic amine radical,
a denoting ½ or 1,
R² denoting hydrogen, an aliphatic hydrocarbon radical having 1 to 20 C atoms, a cycloaliphatic hydrocarbon radical having 5 to 8 C atoms or an optionally substituted aryl radical having 6 to 14 C atoms,
Y¹ denoting O, NR²,
m denoting 2 to 4 and
n denoting 0 to 200,
b) 1 to 48.9 mol% of a structural group of the general formula II 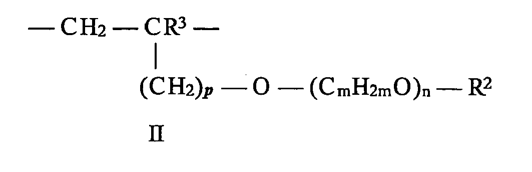 R³ representing hydrogen or an aliphatic hydrocarbon radical having 1 to 5 C atoms
p representing 0 to 3 and
R², m and n having the abovementioned meaning,
c) 0.1 to 5 mol% of structural groups of the formula IIIa or IIIb 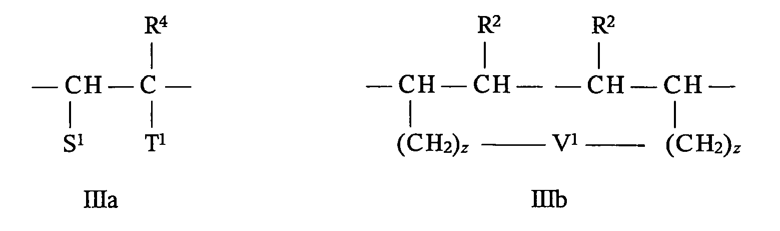 S¹ denoting -H, - COOMₐ¹, - COOR⁵
T¹ denoting 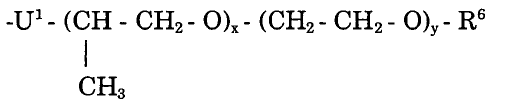 - W¹ - R⁷
- CO-[NH-(CH₂)₃]ₛ-W¹-R⁷
- CO - O - (CH₂)_{z} - W¹ - R⁷
- (CH₂)_{z} - V¹ - (CH₂)_{z} - CH = CH - R²
- COOR⁵ where S¹ =-COOR⁵ or COOMₐ¹
U¹ denoting - CO - NH -, - O -, - CH₂O -
U² denoting - NH - CO -, - O -, - OCH₂-
V¹ denoting -O - CO - C₆H₄ - CO- O- or - W¹-
W₁ denoting 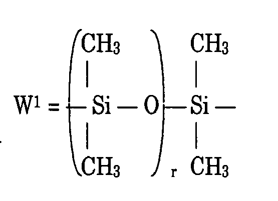 R⁴ denoting H, CH₃
R⁵ denoting aliphatic hydrocarbon radical having 3 to 20 C atoms, cycloaliphatic hydrocarbon radical having 5 to 8 C atoms or aryl radical having 6 to 14 C atoms
R₆ denoting R₂ , 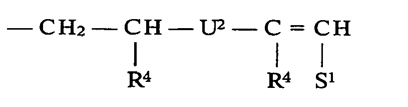 R₇ denoting R₂ , 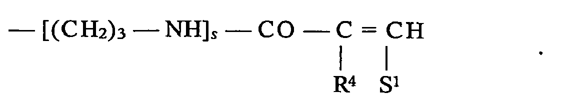 r denoting 2 to 100
s denoting 1, 2
z denoting 0 to 4
x denoting 1 to 150
y denoting 0 to 15
and
d) 0 to 47.9 mol of structural groups of the general formula IVa and/or IVb 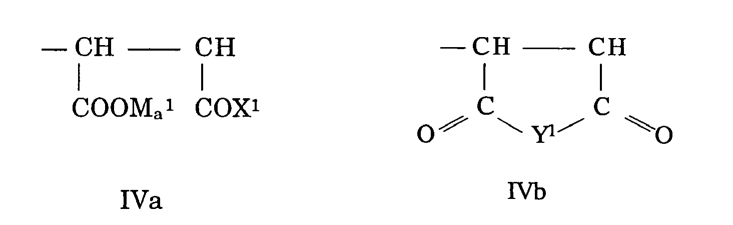 with the abovementioned meaning for a, M¹, X¹ and Y¹.

2. Mixture composition according to Claim 1, **characterized in that** the component II contains
a) 3 to 96 mol% of structural groups of the formula (V) 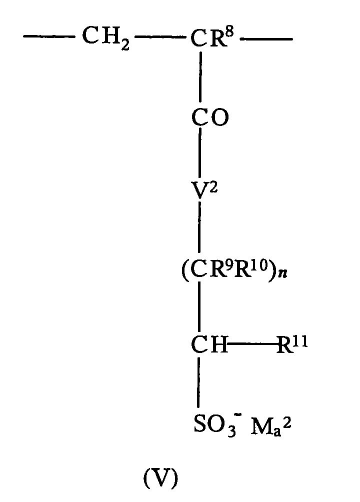 R⁸ denoting hydrogen or methyl
R⁹, R¹⁰, R¹¹ denoting hydrogen, aliphatic hydrocarbon radical having 1 to 6 C atoms, phenyl radical optionally substituted by methyl groups
V² denoting NH or oxygen
M² denoting hydrogen, mono- or divalent metal cation, ammonium or an organic amine radical
n denoting 1 to 5
a denoting ½ or 1,
b) 3 to 96 mol% of structural groups of the formula (VI) 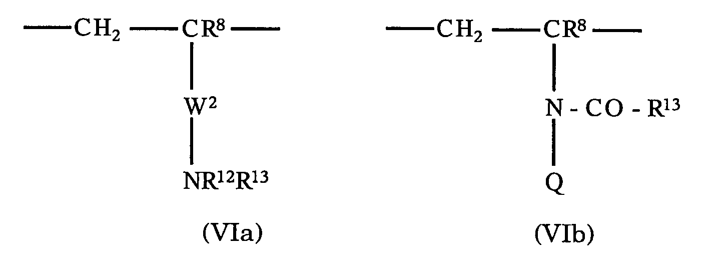 in which W² denotes -CO-, -CO(O)-(CH₂)ₓ-, -CO-NR⁹-(CH₂)ₓ-
x denotes 1 to 6
R¹² and R¹³ denote hydrogen, optionally substituted aliphatic
hydrocarbon radical having 1 to 20 C atoms, cycloaliphatic hydrocarbon radical having 5 to 8 C atoms, aryl radical having 6 to 14 C atoms and
Q denotes hydrogen and -CHR¹²R¹⁴ and, where
Q = H, R¹² and R¹³ in (VIb) together form a -CH₂-(CH₂)_{y}- methylene group with y = 1 to 4, R¹⁴ represents hydrogen, aliphatic hydrocarbon radical having 1 to 4 C atoms, -COOH or -COOM²ₐ and
R⁸, R⁹, M² and a have the abovementioned meaning, and
c) up to 75 mol% of structural groups of the formulae (VII) 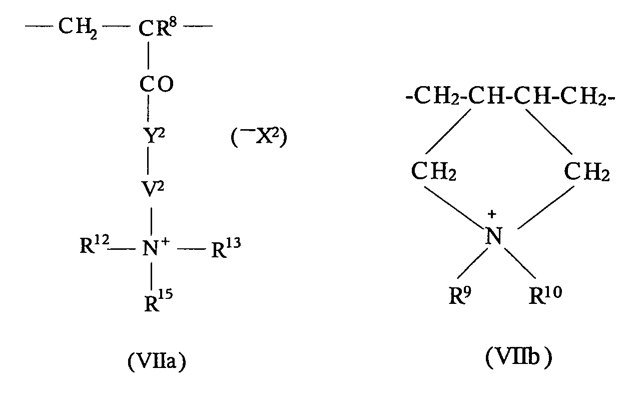 in which Y² = O, NH or NR¹²
V² = -(CH₂)ₓ-, 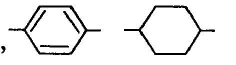 R¹⁵ = R¹² or R¹³, -(CH₂)ₓ-SO₃ ^{⊝}M²ₐ, 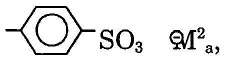 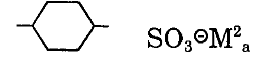 X² = halogen, C₁- to C₄-alkylsulphate or C₁- to C₄-alkylsulphonate
d) and/or up to 50 mol% of structural groups of the formula (VIII) 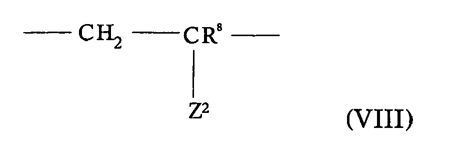 with Z² = -COO(CₘH₂ₘO)ₙ-R¹⁶, -(CH₂)ₚ-O(CH₂CHW³O)ᵣ-(CₘH₂ₘO)ₙ-R¹⁶,
W³ = H, CH₃, C₂H₅,
r = 0 to 100
R¹⁶ = H, 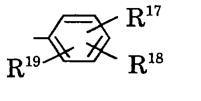 it being necessary for at least one radical R¹⁷, R¹⁸ and/or R¹⁹ to be represented, and a saturated or unsaturated, linear or branched, aliphatic hydrocarbon radical having 1 to 40 C atoms
R¹⁷ = H, C₁-C₄-alkyl, phenyl, benzyl, C₁-C₄-alkoxy, halogen, cyano, -COOH, -COOR¹², -CO-NH₂, -OCOR¹²
R¹⁸ = arylalkyl group having a C₁-C₁₂-alkyl radical and C₆-C₁₄-aryl radical
R¹⁹ = alkylaryl group having a C₁-C₁₂-alkyl radical and C₆-C₁₄-aryl radical
m = 2 to 4
n = 0 to 200
p = 0 to 20
and R⁸ and R¹² have the abovementioned meaning.

3. Mixture composition according to Claim 1 or 2, **characterized in that** it contains the component I in proportions of 0.05 to 50% by weight and the component II in proportions of 0.01 to 10% by weight, in each case as solid.

4. Mixture composition according to any of Claims 1 to 3, **characterized in that**, in component I, R¹ represents a methyl radical.

5. Mixture composition according to any of Claims 1 to 4, **characterized in that**, in component I, M¹ denotes a mono- or divalent metal cation selected from the group consisting of sodium, potassium, calcium or magnesium ions.

6. Mixture composition according to any of Claims 1 to 5, **characterized in that**, in component I, where R² = phenyl, the phenyl radical is also substituted by hydroxyl, carboxyl or sulpho groups.

7. Mixture composition according to any of Claims 1 to 6, **characterized in that**, in component I, ***p*** denotes 0 or 1 and m denotes 2 in the formula II.

8. Mixture composition according to any of Claims 1 to 7, **characterized in that** the component I contains 55 to 75 mol% of structural groups of the formula Ia and/or Ib and/or Ic, 19.5 to 39.5 mol% of structural groups of the formula II, 0.5 to 2 mol% of structural groups of the formula IIIa and/or IIIb and 5 to 20 mol% of structural groups of the formula IVa and/or IVb.

9. Mixture composition according to any of Claims 1 to 8, **characterized in that** the component I additionally contains up to 50 mol%, in particular up to 20 mol%, based on the sum of the structural groups of the formulae I, II, III and IV, of structural groups whose monomers represent a vinyl or (meth)acrylic acid derivative.

10. Mixture composition according to Claim 9, **characterized in that** styrene, α-methylstyrene, vinyl acetate, vinyl propionate, ethylene, propylene, isobutene, N-vinylpyrrolidone, allylsulphonic acid, methallylsulphonic acid, vinylsulphonic acid or vinylphosphonic acid was used as the monomeric vinyl derivative.

11. Mixture composition according to Claim 9, **characterized in that** hydroxyalkyl (meth)acrylates, acrylamide, methacrylamide, AMPS, methyl methacrylate, methyl acrylate, butyl acrylate or cyclohexyl acrylate was used as the monomeric (meth)acrylic acid derivative.

12. Mixture composition according to any of Claims 1 to 11, **characterized in that** the component I has an average molecular weight of 1000 to 200 000 g/mol.

13. Mixture composition according to any of Claims 1 to 12, **characterized in that**, in component II, the mono- or divalent cation represents a sodium, potassium, calcium or magnesium ion and that X represents chlorine, bromine, sulphate or methylsulphate.

14. Mixture composition according to either of Claims 1 and 13, **characterized in that**, in component II, the structural group a) consists of 2-acrylamido-2-methylpropanesulphonic acid (AMPS) or salts thereof.

15. Mixture composition according to any of Claims 1 to 14, **characterized in that**, in component II, up to 50 mol% of the structural groups a), b) or c) are replaced by structural units which are derived from acrylamide or N,N-dimethylacrylamide monomers.

16. Mixture composition according to any of Claims 1 to 15, **characterized in that**, in component II, up to 50 mol% of the structural groups a) are replaced by other structural units which contain sulpho groups and are derived from methallylsulphonic acid or allylsulphonic acid monomers.

17. Mixture composition according to any of Claims 1 to 16, **characterized in that**, in component II, the organic amine radicals preferably represent substituted ammonium groups which are derived from primary, secondary or tertiary C₁- to C₂₀-alkylamines, C₁- to C₂₀-alkanolamines, C₅- to C₈-cycloalkylamines and C₆- to C₁₄-arylamines.

18. Mixture composition according to any of Claims 1 to 17, **characterized in that**, in component II, the hydrocarbon or aryl radicals of R¹² and R¹³ are also substituted by hydroxyl, carboxyl or sulpho groups.

19. Mixture composition according to any of Claims 1 to 17, **characterized in that** the component II consists of 30 to 80 mol% of the structural group a), 5 to 55 mol% of the structural group b), 2 to 30 mol% of the structural group c) and/or 0.2 to 15 mol% of the structural group d).

20. Mixture composition according to any of Claims 1 to 19, **characterized in that**, in component II, the molar fraction of the structural group c) is at least 5 mol% lower than the molar fraction of the structural group a).

21. Mixture composition according to any of Claims 1 to 20, **characterized in that** the component II has a number average molecular weight of 50 000 to 10 000 000 g/mol.

22. Mixture composition according to any of Claims 1 to 21, **characterized in that** the component II additionally contains 0.0001 to 50 mol% of the structural groups e) which are derived from mono-, di- and triolefinic polymerizable compounds.

23. Mixture composition according to Claim 22, **characterized in that** the diolefinic compounds consist of diacrylate or dimethylacrylate esters.

24. Mixture composition according to Claim 22, **characterized in that** trimethylolpropane triacrylate and triallyl isocyanurate are used as triolefinic monomers.

25. Mixture composition according to Claim 22, **characterized in that** the monoolefinic compounds represent acrylic or vinyl derivatives.

26. Mixture composition according to any of Claims 1 to 25, **characterized in that** the component II consisting of the structural groups a), b), c) and/or d) also contains up to 50 mol%, in particular up to 20 mol%, based on the sum of the structural groups a), b), c) and d), of a further structural group f) based on the formula (IX) 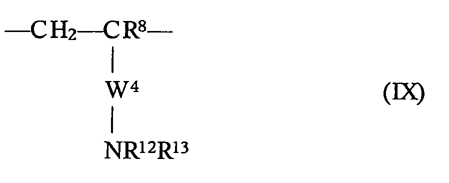 in which
W⁴ represents -CO-O-(CH₂)_{q}-, -CO-NR⁹-(CH₂)_{q}-
q represents 1 to 6 and
R⁸ R⁹, R¹² and R¹³ have the abovementioned meaning.

27. Mixture composition according to any of Claims 1 to 26, **characterized in that** up to 50% of the structural group a) of component II is replaced by the building block g) according to the formula (X) derived from sulpho-containing betaine monomers 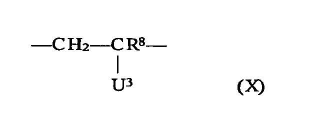 in which
U³ represents 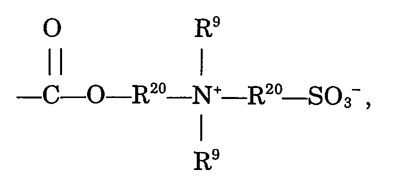 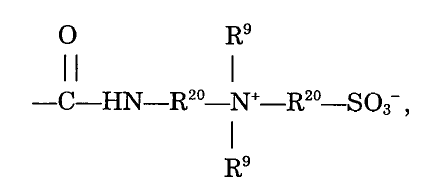 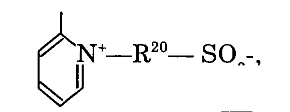 R²⁰ represents -(CH₂)_{q}-, 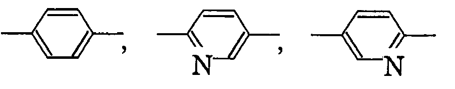 and
R⁸, R⁹ and q have the abovementioned meaning.

28. Mixture composition according to any of Claims 1 to 27, **characterized in that** the component II also contains up to 0.1 mol%, based on the respective sums of the structural groups a), b), c), d), e), f) and g), of a crosslinker component selected from the group consisting of triallylamine, triallylmethylammonium chloride, tetraallylammonium chloride, N,N'-methylenebisacrylamide, triethylene glycol bismethacrylate, triethylene glycol bisacrylate, polyethylene glycol(400) bismethacrylate and polyethylene glycol(400) bisacrylate.

29. Mixture composition according to any of Claims 1 to 28, **characterized in that** it contains the components I and II in premixed form.

30. Mixture composition according to any of Claims 1 to 29, **characterized in that** it is present in viscous and particularly preferably in fluid form.

31. Mixture composition according to any of Claims 1 to 30, containing organic and/or inorganic pigments and fillers.

32. Use of the mixture composition according to any of Claims 1 to 31 in applications in building chemistry, in particular as an additive for aqueous building material systems, particularly preferably containing hydraulic binders, such as cement, lime, gypsum, anhydrite, etc.

33. Use according to Claim 32 in ceramic systems and in water-based paint and coating systems.

34. Use of the mixture composition according to Claim 32 as a plasticizer, in particular having a simultaneously stabilizing effect.

35. Use according to Claim 34 in self-levelling levelling compounds and fillers, particularly preferably as a casein substitute.

## Revendications

1. Composition de mélange à action dispersante, contenant
I) des copolymères à base de dérivés d'acides mono- ou dicarboxyliques et d'éthers alcényliques d'oxyalkylène glycol et
II) des co- et terpolymères contenant des groupes sulfo solubles dans l'eau, ayant un poids moléculaire moyen en nombre de 50 000 à 20 000 000 g/mol, le composant I) contenant
a) 51 à 95 % en moles de groupes constitutifs de formule Ia et/ou Ib et/ou Ic 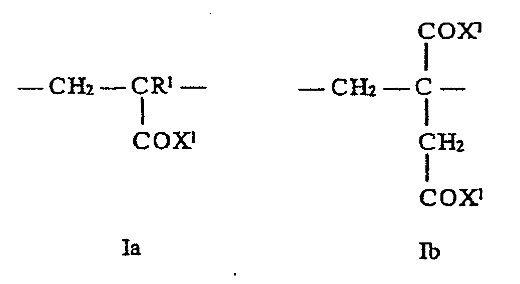 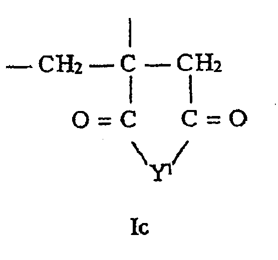 dans lesquelles
R¹ = un hydrogène ou un radical hydrocarboné aliphatique contenant 1 à 20 atomes C
X¹ = -OMₐ¹, -O- (CₘH₂ₘO)ₙ-R², -NH- (CₘH₂ₘO) ₙ-R²
M¹ = un hydrogène, un cation métallique mono- ou bivalent, un ion ammonium, un radical amine organique,
a = ½ ou 1
R² = un hydrogène, un radical hydrocarboné aliphatique contenant 1 à 20 atomes C, un radical hydrocarboné cycloaliphatique contenant 5 à 8 atomes C, un radical aryle éventuellement substitué contenant 6 à 14 atomes C
Y¹ = O, NR²
m = 2 à 4 et
n = 0 à 200,
b) 1 à 48,9 % en moles du groupe constitutif de formule générale II 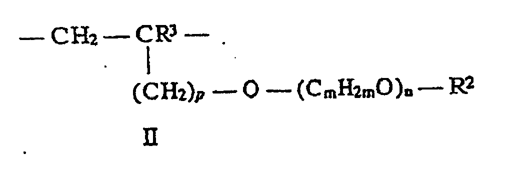 dans laquelle
R³ représente un hydrogène ou un radical hydrocarboné aliphatique contenant 1 à 5 atomes C
p représente 0 à 3
et R², m et n ont la signification donnée précédemment,
c) 0,1 à 5 % en moles de groupes constitutifs de formule IIIa ou IIIb 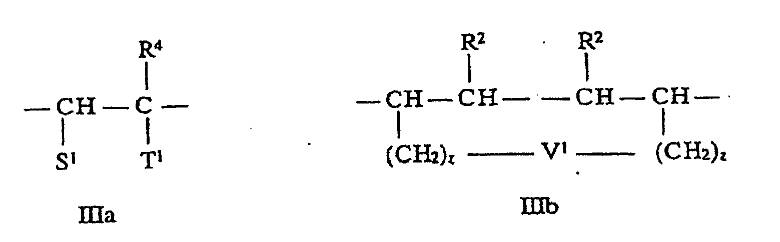 dans lesquelles
S¹ = -H, -COOMₐ¹, -COOR⁵
T¹ = 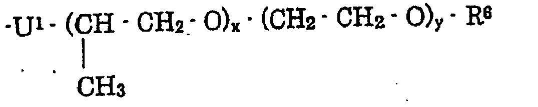 -W¹-R⁷
-CO-[NH-(CH₂)₃]ₛ-W¹-R⁷
-CO-O-(CH₂)_{z}-W¹-R⁷
- (CH₂)_{z}-V¹-(CH₂)_{z}-CH=CH-R²
-COOR⁵ dans le cas où S¹ = -COOR⁵ ou COOMₐ¹
U¹ = -CO-NH- , -O-, -CH₂O-
U² = -NH-CO-, -O-, -OCH₂-
V¹ = -O-CO-C₆H₄-CO-O- ou -W¹- 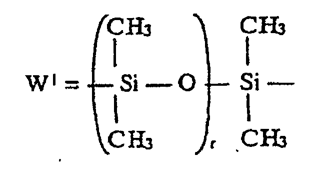 R⁴ = H, CH₃
R⁵ = un radical hydrocarboné aliphatique contenant 3 à 20 atomes C, un radical hydrocarboné cycloaliphatique contenant 5 à 8 atomes C, un radical aryle contenant 6 à 14 atomes C
R⁶ = R², 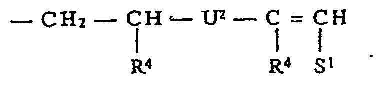 R⁷ = R², 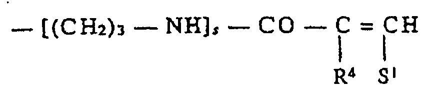 r = 2 à 100
s = 1, 2
z = 0 à 4
x = 1 à 150
y = 0 à 15
et
d) 0 à 47,9 moles de groupes constitutifs de formule générale IVa et/ou IVb 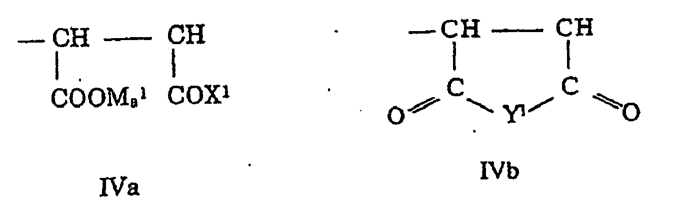 avec la signification donnée précédemment pour a, M¹, X¹ et Y¹_{.}

2. Composition de mélange selon la revendication 1, **caractérisée en ce que** le composant II contient
a) 3 à 96 % en moles de groupes constitutifs de formule (V) 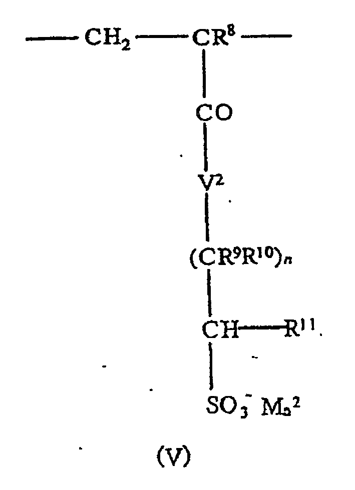 dans laquelle
R⁸ = un hydrogène ou un méthyle
R⁹, R¹⁰, R¹¹ = un hydrogène, un radical hydrocarboné aliphatique contenant 1 à 6 atomes C, un radical phényle éventuellement substitué avec des groupes méthyle,
V² = NH ou oxygène
M² = un hydrogène, un cation métallique mono- ou bivalent, un ammonium ou un radical amine organique
n = 1 à 5
a = % ou 1
b) 3 à 96 % en moles de groupes constitutifs de formule (VI) 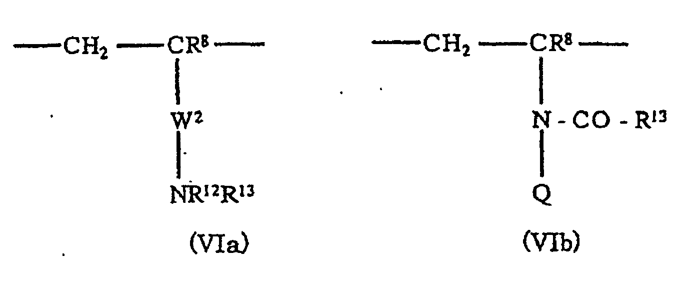 dans lesquelles
W² = -CO-, -CO(O)-(CH₂)ₓ-, -CO-NR⁹-(CH₂)ₓ-
x = 1 à 6
R¹² et R¹³ = un hydrogène, un radical hydrocarboné aliphatique éventuellement substitué contenant 1 à 20 atomes C, un radical hydrocarboné cycloaliphatique contenant 5 à 8 atomes C, un radical aryle contenant 6 à 14 atomes C et
Q = un hydrogène et -CHR¹²R¹⁴ et, dans le cas où Q = H, R¹² et R¹³ forment ensemble dans (VIb) un groupe méthylène -CH₂-(CH₂)_{y}- avec y = 1 à 4, R¹⁴ = un hydrogène, un radical hydrocarboné aliphatique contenant 1 à 4 atomes C, -COOH ou -COOM²ₐ et
R⁸, R⁹, M² et a ont la signification donnée précédemment
et
c) jusqu'à 75 % en moles de groupes constitutifs des formules (VII) 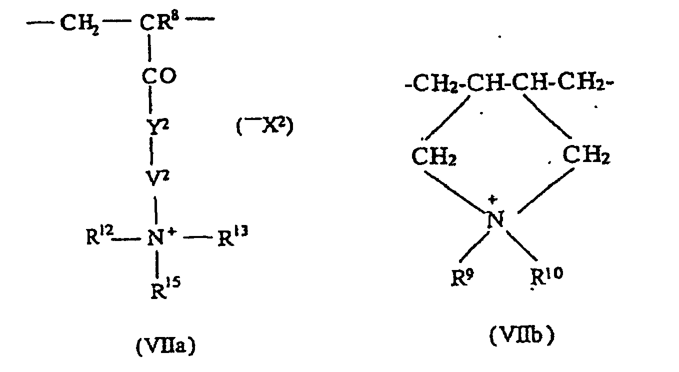 dans lesquelles
Y² = O, NH ou NR¹²,
V² = -(CH₂)ₓ-, 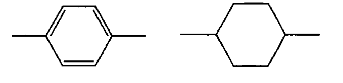 R¹⁵ = R¹² ou R¹³, 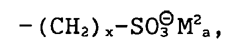 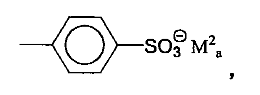 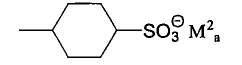 X² = un halogène, un sulfate d'alkyle en C₁ à C₄ ou un sulfonate d'alkyle en C₁ à C₄
d) et/ou jusqu'à 50 % en moles de groupes constitutifs
de formule (VIII) 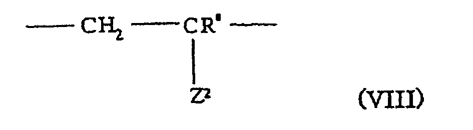 avec Z² = -COO(CₘH₂ₘO)ₙ-R¹⁶, - (CH₂)ₚ-O(CH₂CHW³O)ᵣ-(CₘH₂ₘO)ₙ-R¹⁶,
W³ = H , CH₃, C₂H₅,
r = 0 à 100
R¹⁶ = H, 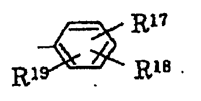 au moins un radical R¹⁷, R¹⁸ et/ou R¹⁹ devant être présent, ainsi qu'un radical hydrocarboné aliphatique saturé ou insaturé, linéaire ou ramifié, contenant 1 à 40 atomes C
R¹⁷ = H, un alkyle en C₁-C₄, un phényle, un benzyle, un alcoxy en C₁-C₄, un halogène, un cyano, -COOH, -COOR¹², -CO-NH₂, -OCOR¹²
R¹⁸ = un groupe arylalkyle avec un radical alkyle en C₁-C₁₂ et un radical aryle en C₆-C₁₄
R¹⁹ = un groupe alkylaryle avec un radical alkyle en C₁-C₁₂ et un radical aryle en C₆-C₁₄
m = 2 à 4
n = 0 à 200
p = 0 à 20
et R⁸ et R¹² ayant la signification donnée précédemment.

3. Composition de mélange selon la revendication 1 ou 2, **caractérisée en ce qu'**elle contient le composant I en proportions de 0,05 à 50 % en poids et le composant II en proportions de 0,01 à 10 % en poids, à chaque fois sous forme solide.

4. Composition de mélange selon l'une quelconque des revendications 1 à 3, **caractérisée en ce que** R¹ représente un radical méthyle dans le composant I.

5. Composition de mélange selon l'une quelconque des revendications 1 à 4, **caractérisée en ce que** M¹ représente dans le composant I un cation métallique mono- ou bivalent choisi dans le groupe des ions sodium, potassium, calcium ou magnésium.

6. Composition de mélange selon l'une quelconque des revendications 1 à 5, **caractérisée en ce que** dans le cas où R² = phényle dans le composant I, le radical phényle est encore substitué par des groupes hydroxyle, carboxyle ou acide sulfonique.

7. Composition de mélange selon l'une quelconque des revendications 1 à 6, **caractérisée en ce que** p = 0 ou 1 et m = 2 dans la formule II dans le composant I.

8. Composition de mélange selon l'une quelconque des revendications 1 à 7, **caractérisée en ce que** le composant I contient 55 à 75 % en moles de groupes constitutifs de formule Ia et/ou Ib et/ou Ic, 19,5 à 39,5 % en moles de groupes constitutifs de formule II, 0,5 à 2 % en moles de groupes constitutifs de formule IIIa et/ou IIIb et 5 à 20 % en moles de groupes constitutifs de formule IVa et/ou IVb.

9. Composition de mélange selon l'une quelconque des revendications 1 à 8, **caractérisée en ce que** le composant I contient également jusqu'à 50 % en moles, notamment jusqu'à 20 % en moles, par rapport à la somme des groupes constitutifs de formule I, II, III et IV, de groupes constitutifs dont les monomères sont un dérivé de vinyle ou d'acide (méth-)acrylique.

10. Composition de mélange selon la revendication 9, **caractérisée en ce que** le styrène, l'α-méthylstyrène, l'acétate de vinyle, le propionate de vinyle, l'éthylène, le propylène, l'isobutène, la N-vinylpyrrolidone, l'acide allylsulfonique, l'acide méthallylsulfonique, l'acide vinylsulfonique ou l'acide vinylphosphonique est utilisé en tant que dérivé de vinyle monomère.

11. Composition de mélange selon la revendication 9, **caractérisée en ce que** les (méth)acrylates d'hydroxyalkyle, l'acrylamide, le méthacrylamide, l'AMPS, le méthacrylate de méthyle, l'acrylate de méthyle, l'acrylate de butyle ou l'acrylate de cyclohexyle sont utilisés en tant que dérivé d'acide (méth-)acrylique monomère.

12. Composition de mélange selon l'une quelconque des revendications 1 à 11, **caractérisée en ce que** le composant I présente un poids moléculaire moyen de 1 000 à 200 000 g/mol.

13. Composition de mélange selon l'une quelconque des revendications 1 à 12, **caractérisée en ce que** le cation mono- ou bivalent dans le composant II est un ion sodium, potassium, calcium ou magnésium et **en ce que** X = chlore, brome, sulfate ou sulfate de méthyle.

14. Composition de mélange selon l'une quelconque des revendications 1 à 13, **caractérisée en ce que** le groupe constitutif a) dans le composant II est constitué de l'acide 2-acrylamido-2-méthylpropanesulfonique (AMPS) ou ses sels.

15. Composition de mélange selon l'une quelconque des revendications 1 à 14, **caractérisée en ce que** jusqu'à 50 % en moles des groupes constitutifs a), b) ou c) dans le composant II sont remplacés par des unités structurales qui dérivent de monomères d'acrylamide ou de N,N-diméthylacrylamide.

16. Composition de mélange selon l'une quelconque des revendications 1 à 15, **caractérisée en ce que** jusqu'à 50 % en moles des groupes constitutifs a) dans le composant II sont remplacés par d'autres unités structurales contenant des groupes sulfo qui dérivent de monomères de l'acide méthallylsulfonique ou de l'acide allylsulfonique.

17. Composition de mélange selon l'une quelconque des revendications 1 à 16, **caractérisée en ce que** les radicaux amine organiques dans le composant II sont de préférence des groupes ammonium substitués qui dérivent d'alkylamines en C₁-C₁₀, alcanolamines en C₁-C₂₀, cycloalkylamines en C₅-C₈ et arylamines en C₆-C₁₄ primaires, secondaires et tertiaires.

18. Composition de mélange selon l'une quelconque des revendications 1 à 17, **caractérisée en ce que** les radicaux hydrocarbonés ou aryle de R¹² et R¹³ dans le composant II sont encore substitués avec des groupes hydroxyle, carboxyle ou acide sulfonique.

19. Composition de mélange selon l'une quelconque des revendications 1 à 17, **caractérisée en ce que** le composant II est constitué de 30 à 80 % en moles du groupe constitutif a), 5 à 55 % en moles du groupe constitutif b), 2 à 30 % en moles du groupe constitutif c) et/ou 0,2 à 15 % en moles du groupe constitutif d).

20. Composition de mélange selon l'une quelconque des revendications 1 à 19, **caractérisée en ce que** la proportion molaire du groupe constitutif c) dans le composant II est inférieure d'au moins 5 % en moles à la proportion molaire du groupe constitutif a).

21. Composition de mélange selon l'une quelconque des revendications 1 à 20, **caractérisée en ce que** le composant II présente un poids moléculaire moyen en nombre de 50 000 à 10 000 000 g/mol.

22. Composition de mélange selon l'une quelconque des revendications 1 à 21, **caractérisée en ce que** le composant II contient également 0,0001 à 50 % en moles des groupes constitutifs e), qui dérivent de composés mono-, di- et trioléfiniques aptes à une polymérisation.

23. Composition de mélange selon la revendication 22, **caractérisée en ce que** les composés dioléfiniques sont constitués d'esters de diacrylate ou de diméthylacrylate.

24. Composition de mélange selon la revendication 22, **caractérisée en ce que** du triacrylate de triméthylolpropane et de l'isocyanurate de triallyle sont utilisés en tant que monomères trioléfiniques.

25. Composition de mélange selon la revendication 22, **caractérisée en ce que** les composés monooléfiniques sont des dérivés acryliques ou vinyliques.

26. Composition de mélange selon l'une quelconque des revendications 1 à 25, **caractérisée en ce que** le composant II constitué des groupes constitutifs a), b), c) et/ou d) contient encore jusqu'à 50 % en moles, notamment jusqu'à 20 % en moles, par rapport à la somme des groupes constitutifs a), b), c) et d), d'un groupe constitutif f) supplémentaire à base de la formule (IX) 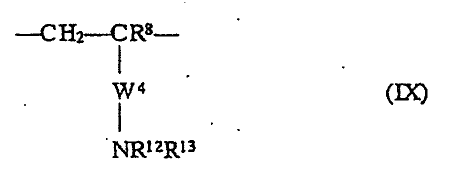 dans laquelle
W⁴ = -CO-O-(CH₂)_{q}-, -CO-NR⁹-(CH₂)_{q}-
q = 1 à 6 et
R⁸, R⁹, R¹² et R¹³ ont la signification donnée précédemment.

27. Composition de mélange selon l'une quelconque des revendications 1 à 26, **caractérisée en ce que** jusqu'à 50 % des groupes constitutifs a) du composant II sont remplacés par les éléments constitutifs g) de formule (X) dérivés de monomères de bétaïne contenant de l'acide sulfonique 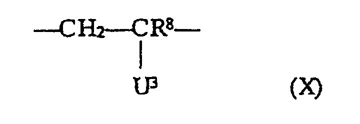 dans laquelle
U³ = 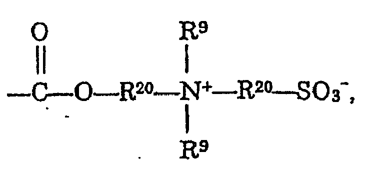 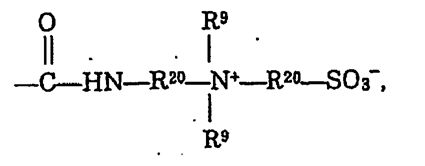 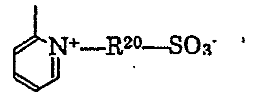 R²⁰ = -(CH₂)_{q}-, 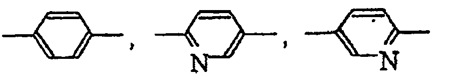 et
R⁸, R⁹ et q ont la signification donnée précédemment.

28. Composition de mélange selon l'une quelconque des revendications 1 à 27, **caractérisée en ce que** le composant II contient encore jusqu'à 0,1 % en moles, par rapport aux sommes respectives des groupes constitutifs a), b), c), d), e), f) et g), d'un composant réticulant choisi dans le groupe constitué par la triallylamine, le chlorure de triallylméthylammonium, le chlorure de tétraallylammonium, le N,N'-méthylène-bisacrylamide, le bisméthacrylate de triéthylène glycol, le bisacrylate de triéthylène glycol, le bisméthacrylate de polyéthylène glycol (400) et le bisacrylate de polyéthylène glycol (400).

29. Composition de mélange selon l'une quelconque des revendications 1 à 28, **caractérisée en ce qu'**elle contient les composants I et II prémélangés.

30. Composition de mélange selon l'une quelconque des revendications 1 à 29, **caractérisée en ce qu'**elle se présente sous forme visqueuse et de manière particulièrement préférée sous forme liquide.

31. Composition de mélange selon l'une quelconque des revendications 1 à 30, contenant des charges et des pigments organiques et/ou inorganiques.

32. Utilisation de la composition de mélange selon l'une quelconque des revendications 1 à 31 dans des applications chimiques de construction, notamment en tant qu'additif dans des systèmes aqueux de matériaux de construction, de manière particulièrement préférée contenant des liants hydrauliques tels que le ciment, le talc, le gypse, l'anhydrite, etc.

33. Utilisation selon la revendication 32 dans des systèmes céramiques et dans des systèmes de peinture et de revêtement à base d'eau.

34. Utilisation de la composition de mélange selon la revendication 32 en tant qu'agent fluidifiant, notamment ayant une action stabilisante simultanée.

35. Utilisation selon la revendication 34 dans des matériaux égalisants et des enduits autonivelants, de manière particulièrement préférée en remplacement de la caséine.
